# EUROPEAN PATENT SPECIFICATION

(11) **EP 3 723 309 B1**
(45) Date of publication and mention of the grant of the patent: **06.08.2025**
(21) Application number: 19198734.6
(22) Date of filing: 20.09.2019
(51) Int. Cl.: H04B 1/692, H04J 11/00, H04W 56/00, H04J 13/00

(54) **SYNCHRONIZATION IN A PSSS RADIO COMMUNICATION TECHNOLOGY FOR HIGH DATA RATES**
SYNCHRONISATION IN EINER PSSS-FUNKKOMMUNIKATIONSTECHNIK FÜR HOHE DATENRATEN
SYNCHRONISATION DANS UNE TECHNOLOGIE DE COMMUNICATION RADIO PSSS POUR VITESSES DE DONNÉES ÉLEVÉES

(30) Priority: 08.04.2019 EP 19167902
(43) Date of publication of application: 14.10.2020
(73) Proprietor: IHP GmbH - Leibniz Institute for High Performance Microelectronics/ Leibniz-Institut für innovative Mikroelektronik, 15236 Frankfurt (Oder) (DE)
(72) Inventor: WIMMER, Lara, 15236 Frankfurt (Oder) (DE); METHFESSEL, Michael, 15236 Frankfurt (Oder) (DE); KRAEMER, Rolf, 15236 Frankfurt (Oder) (DE); KRISHNEGOWDA, Karthik, 15236 Frankfurt (Oder) (DE)
(74) Representative: Eisenführ Speiser

(56) References cited:
- US-A- 6 097 711
- US-A- 6 128 332
- KRISHNEGOWDA KARTHIK ET AL: "Towards 100 Gbps Wireless Communication in THz Band with PSSS Modulation: A Promising Hardware in the Loop Experiment", 2015 IEEE INTERNATIONAL CONFERENCE ON UBIQUITOUS WIRELESS BROADBAND (ICUWB), IEEE, 4 October 2015 (2015-10-04), pages 1 - 5, XP032809419, DOI: 10.1109/ICUWB.2015.7324520
- UNDERBERG LISA ET AL: "ParSec: Wireless industrial communication first PSSS measurements in industrial environment", 2017 IEEE 13TH INTERNATIONAL WORKSHOP ON FACTORY COMMUNICATION SYSTEMS (WFCS), IEEE, 31 May 2017 (2017-05-31), pages 1 - 8, XP033129104, DOI: 10.1109/WFCS.2017.7991941
- UNDERBERG LISA ET AL: "A PSSS Approach for Wireless Industrial Communication Applying Iterative Symbol Detection", IEEE TRANSACTIONS ON INDUSTRIAL INFORMATICS, IEEE SERVICE CENTER, NEW YORK, NY, US, vol. 14, no. 5, 1 May 2018 (2018-05-01), pages 2108 - 2119, XP011683097, ISSN: 1551-3203, [retrieved on 20180503], DOI: 10.1109/TII.2017.2779471
- KRAEMER ROLF ET AL: "ParSec: A PSSS approach to industrial radio with very low and very flexible cycle timing", 2016 24TH EUROPEAN SIGNAL PROCESSING CONFERENCE (EUSIPCO), EURASIP, 29 August 2016 (2016-08-29), pages 1222 - 1226, XP033011131, DOI: 10.1109/EUSIPCO.2016.7760443
- MESSINGER T ET AL: "Multi-level 20 Gbit/s PSSS transmission using a linearity-limited 240 GHz wireless frontend", 2015 IEEE INTERNATIONAL CONFERENCE ON MICROWAVES, COMMUNICATIONS, ANTENNAS AND ELECTRONIC SYSTEMS (COMCAS), IEEE, 2 November 2015 (2015-11-02), pages 1 - 3, XP032834907, DOI: 10.1109/COMCAS.2015.7360436

## Description

The present invention is in the field of radio communication using a Parallel Sequence Spread Spectrum (PSSS) technology. More specifically, the invention relates to a method for operating a radio transmitter of a radio transceiver in transmitting payload data symbols via a radio channel of a radio communication system, to a method for operating a receiver of a slave radio transceiver of a radio communication system in synchronizing carrier frequencies with a transmitter of a master transceiver of the radio communication system, to a radio transmitter for exchanging payload data symbols via a radio channel of a radio communication system, and to a slave radio transceiver for receiving a radio signal that represents a plurality of payload data symbols continuously transmitted by a master transceiver of a radio communication system.

The Parallel Sequence Spread Spectrum (PSSS) coding scheme is a modulation scheme on the physical layer that forms a part of the IEEE 802.14.5 wireless personal area network (WPAN) standard and of the Zigbee standard. PSSS is based on direct-sequence spread spectrum technology in conjunction with orthogonal code division multiplexing. Hence, a given bit of payload data is spread by a respective code word, modulated and sent via the radio communication channel, received on the receiver side, demodulated and de-spread to a single pulse. PSSS uses a Code Division Multiple Access (CDMA) concept, allowing radio transmitters sending their PSSS payload data symbols in parallel, using a superposition of orthogonal code words formed by cyclically shifted maximal-length sequences, which are also referred to as m-sequences. In addition, a cyclic prefix in the sent payload data symbols includes a repetition of the end of the respective same payload data symbols.

PSSS has been recognized for combining advantages of code spreading with a capability to achieve a low latency and higher data rates. For these reasons, radio communication systems using PSSS are currently also considered for use in industrial manufacturing control applications. However, for replacing legacy cable-based communication in a manufacturing cell, a radio communication system allowing a particularly high maximum data rate is required, to enable a parallel control of a large number of devices.

The document KRISHNEGOWDA KARTHIK ET AL: "Towards 100 Gbps Wireless Communication in THz Band with PSSS Modulation: A Promising Hardware in the Loop Experiment", 2015 IEEE INTERNATIONAL CONFERENCE ON UBIQUITOUS WIRELESS BROADBAND (ICUWB), IEEE, 4 October 2015 (2015-10-04), pages 1-5, describes wireless communication with PSSS modulation.

The document UNDERBERG LISA ET AL: "ParSec: Wireless industrial communication first PSSS measurements in industrial environment", 2017 IEEE 13TH INTERNATIONAL WORKSHOP ON FACTORY COMMUNICATION SYSTEMS (WFCS), IEEE, 31 May 2017 (2017-05-31), pages 1-8, gives an overview of the PSSS modulation concept. PSSS frames described use a preamble for synchronization and channel estimation.

US 6,097,711 is related to a direct sequence code division multiple access (DS-CDMA) trans-mission method.

### Description of the invention

It would therefore be desirable to achieve a particularly high data rate, i.e., a particularly high amount of payload data that can be transmitted in a given time span using a PSSS radio communication technology.

The present invention is based on the recognition that the requirement of using a preamble for synchronization between a radio transmitter and a receiving radio transceiver in a PSSS radio communication system imposes limitations on the achievable data rate. As a basis for achieving a desired radio communication at particularly high data rates in PSSS radio communication, the present invention relates to complementary aspects of design and operation of a radio transmitter and a receiving radio transceiver, which allow achieving a synchronization between the radio transmitter and the receiving radio transceiver in a PSSS radio communication technology without requiring use of a preamble. This in turn allows using more time for exchanging payload data and thus achieving a particularly high data rate and a particularly low latency.

It is noted prior to the following description, that the present specification uses the terms "radio transceiver" and, for brevity, "transceiver" in parallel with the same meaning. Also, transceivers are herein occasionally referred to in short as nodes, and are sometimes only identified by their role as a master or a slave, which is to be assumed by the respective transceiver in operation.

Before, turning to the different aspects of the solution according to the present invention, the following sections provide an analysis of how tasks of synchronization are solved according to the prior art.

In wireless communication systems, transmitters and receivers must be synchronized. As an illustrative example, in radio systems employing a Parallel Sequence Spread Spectrum (PSSS) technology, a PSSS symbol consists of several chips, and the receiver must recognize the beginning of a PSSS symbol. The receiver must therefore be synchronized with both the carrier frequency and the symbol rate of the transmitter.

### Analysis: carrier frequency offset

Each node, be it a master node or a slave node, has its own crystal oscillator. The frequencies of the oscillators do not match exactly. This frequency offset in the carrier frequency causes a constant rotation of the phase in the IQ diagram at the receiver. In order to transfer data reliably, this effect must be compensated for. This is referred to herein as carrier frequency synchronization.

It is known to use a Costas Loop for this purpose. A Costas loop is generally described as a phase-locked loop (PLL) type circuit for carrier frequency recovery from suppressed-carrier modulation signals and phase modulation signals. An adjustable oscillator in a feed-back loop is set to the carrier frequency and phase ("locked"). A central point is that the "lock" remains when the phase is rotated 180° in BPSK modulation. This achieves that a slave node remains synchronized with the master node, although the pure carrier frequency is not contained in the received signal.

In downlink communication, according to the prior art, the effect of the frequency offset is subsequently subtracted at the receiver of the slave nodes. In uplink communication, however, the receiver of the master node cannot consider at the same time all individual frequency offsets existing with regard to the different individual slave nodes. Therefore, the transmitters of the slave nodes are configured to shift their phase so that the frequency offset does not appear at the receiver of the master node. This is referred to as a "pre-compensation". However, the offset of the carrier frequencies remains the same, even if it no longer shows in a rotation of the phase.

The particular design of the Costas loop in prior art transceivers is determined by the type of modulation used. A Costas loop can be created relatively easily for a BPSK coding scheme. However, the design becomes very complicated for more complex modulation schemes. It is therefore a further limitation of the prior art that it is not possible to change the modulation scheme of a master node or slave node, such as from PAM to QAM, or to change a number of symbols used.

### Analysis: chip synchronization

In uplink communication indices in the data vector are assigned to each slave node, which it may use to transmit its signal. No entry in the data vector may be used by two slave nodes simultaneously. In order for the data values to be decoded uniquely, the PSSS symbols of the individual slave nodes must overlap well enough in time. Typically, a suitable amount of overlap is below a third of a chip duration. This means that the chips of the individual slave nodes must be synchronized.

PSSS symbols, according to the prior art, are divided into a superordinate frame structure consisting of a preamble and a data frame. To achieve chip synchronization, special sequences are sent in an uplink preamble.

Typically, PSSS receivers use two correlators, the first one for chip and symbol synchronization, the second for the PSSS demodulation. The first PSSS receiver convolutes the incoming signal. It convolutes the incoming signal with the same m-sequence that was used at the transmitter for PSSS modulation in the preamble. This convolution is not cyclic, so it does not correspond to the general decoding of the PSSS symbols. The first correlator has a significantly higher sampling rate than the second, which it needs to determine the timing of the chips as accurately as possible. In known radio communication systems, the chip timing of the individual slave nodes is determined and synchronized to a third of the chip duration.

The arrival time of the data of the individual slave nodes depends on their distance from the master node and on the propagation speed of the signal. In order for the PSSS symbols of the individual slave nodes to overlap exactly in time, the distances of the individual slave nodes to the master node must be taken into account. According to the state of the art, a reference slave node is awarded. The other slave nodes optimize the arrival time of their data relative to the reference slave node. In return, the master node tells them how much sooner or later they have to send their signal so that the PSSS symbols overlap perfectly and the chips are synchronized. A known achieved granularity of the adaptation is minimum 1/3 chip duration (16.5 ns equals 5.5 m).

### Analysis: symbol synchronization

After chip synchronization, the data of the slave nodes are sent correctly in uplink communication, but the master node does not automatically know when the individual symbols begin. The same problem also arises in downlink communication. According to the prior art, the symbol limits are determined using the fact that in the preamble several m-sequences are transmitted one after the other, which are then evaluated in the first correlator of the slave node receiver. This known method of symbol synchronization can be correspondingly applied in the uplink.

The following description turns to the different aspects of the invention.

### First aspect of the invention: Method for operating a radio transmitter

A first aspect of the invention relates to a method for operating a radio transmitter in accordance with claim 1.

The method of the first aspect of the present invention forms a process for generating and transmitting payload data symbols on the transmitter side. At the same time the method provides all information required by a receiving transceiver for performing a synchronization with the transmitter, without requiring a preamble. In particular, the method uses a symbol clock frequency and a transmitter carrier frequency for transmitting the payload data symbols, which are both derived from the same transmitter-reference-clock signal. As will become clear in the context of the description of the method of second aspect of the invention, the "visibility" of the symbol clock frequency in the transmitted signal of the payload data symbols allows a receiver to generate and continuously adapt its receiver carrier signal and achieve synchronization with the transmitter carrier frequency.

As such, the method allows continuously transmitting payload data in a continuous sequence or stream of payload data symbols, without requiring an interruption of the payload data symbols by preamble symbols for allowing the receiver to detect and handle any carrier frequency offset. According to the method of the first aspect, the provision of synchronization information in the payload data symbols is enabled in particular by providing a guard section in the at least one of the payload data vectors to be encoded using a PSSS coding scheme. The guard section in such vectors of payload data to be transmitted is formed by a pilot value embedded between two multiple-repetition sequences of a reference value. This way, payload data symbols are formed and transmitted, which in addition to a respective fraction of encoded payload data to be transmitted contain the guard section in encoded form.

The transmitter provides the payload data symbols for continuous transmission via the radio channel at the symbol clock frequency and uses a transmitter carrier signal having the transmitter carrier frequency to continuously transmit the payload data symbols via the radio channel. A receiving transceiver is enabled to achieve synchronization with the transmitter by deriving from the received signal a reconstructed symbol clock frequency and using it for generating the receiver carrier frequency in synchrony with the transmitter carrier frequency. A fixed ratio between symbol clock frequency and the carrier frequency must be defined within the PSSS radio communication system and "known" and used by both the transmitter and the receiver.

As will also be explained further below in the context of the method of the second aspect, the particular structure of the guard section encoded within the payload data symbol to be transmitted allows a receiver to continuously measure the symbol clock frequency and to perform carrier frequency synchronization with the transmitter without requiring an interruption of the reception of the payload data. In contrast to prior-art solutions employing a Costas loop, the difference between transmitter and receiver frequency is not preserved. Instead, the proposed solution eliminates the cause of the problem by changing the receiver's carrier frequency. The method of the first aspect thus advantageously allows avoiding the generation and transmission of separate preamble symbols by the radio transmitter to support synchronization on the receiver side. Such separate preamble symbols would interrupt the transmission of payload data symbols. Thus, by embedding the encoded guard section in payload data symbols, such interruption can be avoided and a particularly high data rate as well as a low latency can be achieved.

Not all payload data symbols need to include a guard section. The frequency of including a guard section within a stream of payload data symbols is a design choice. However, the frequency should be high enough to achieve and maintain synchronization of the carrier frequencies between the transmitter and the receiver. Instead of a guard section, additional payload data can be included in a given payload data symbol. Thus, the lower the frequency of embedding the guard section within the payload data symbols of a given stream of payload data symbols, the higher is the payload data rate that can be achieved.

It is noted that the encoding of the payload data vectors according to the invention, which has been described above by "determining respective products of the respective payload data vectors and a code matrix of mutually orthogonal code words of a cyclic code", is not meant to be interpreted in a limited literal way. It is in fact not a requirement according to the present invention to actually calculate the respective products of the respective payload data vectors and a code matrix. In particular, the method need not involve any handling of a code matrix on the transmitter side. The determination of the respective products can be performed in other ways, in particular in simpler ways, for instance by determining respective linear combinations of the coefficients of given payload data vectors using respective code words of the cyclic code.

As will become clear in the context of the description of other aspects of the invention further below, the use of the particular structure of the payload data vectors and the resulting PSSS payload data symbols on the radio transmitter side not only has the advantage of allowing synchronization of the carrier frequency, but in different preferred embodiments also allows performing chip synchronization, symbol synchronization, a particularly simple method of channel estimation, and an equally simple method of channel correction.

The following description turns to exemplary advantageous embodiments of the method of the first aspect.

The method of the first aspect is of general nature in that it is applicable in the uplink direction as well as in the downlink direction. This distinction is particularly important in radio communication systems implementing a star topology, having one radio transceiver taking the role of a master and a plurality of radio transceivers taking the role of slaves. In the downlink direction, a slave receives the payload data symbols from the master. Thus, the slave receives payload data symbols via only one active radio channel. The situation is more complex in the uplink direction. Here, the master receives payload data symbols from a plurality of slaves, typically in parallel.

In order to enable an application of the inventive concept also in uplink radio communication, forming the data vectors for transmission via an uplink radio channel of the radio communication system by a transmitter of a slave transceiver, comprises in one embodiment of the method:
- the transmitter transmitting the payload data symbols via an uplink radio channel of the radio communication system to a master transceiver of the radio communication system; and
- the transmitter filling only a slave-specific data vector section of the payload data vectors, which is assigned unambiguously in the radio communication system only to the given slave transceiver, with the guard section and with the fraction of payload data that is to be encoded in the respective payload data symbol, and
- the transmitter filling any remaining section of the payload data vectors with the reference value.

By unambiguously assigning to each slave transmitter in the radio communication system a transmitter-specific data vector section of the payload data vectors, the master receiver is able to distinguish the respective guard sections it receives from the different slave transmitters, and is thus enabled to make an unambiguous identification and perform channel estimation individually with respect to each slave transmitter, and thus each corresponding radio channel, even if the different slave transmitters send their payload data symbols in parallel. Filling remaining sections of the respective data vectors with the reference value on the transmitter side avoids interference on the receiver side between the signals received from the different slaves. A suitable reference value is "0".

Symbols in the down- and uplink are preferably transmitted continuously and in a regular symbol cycle. Ultimately, for many industrial scenarios it is an additional requirement that the transmission of payload data symbols is synchronized with a higher-level clock, for example the clock of a fieldbus system. An embodiment that is particularly suitable for use in such application fields, a further embodiment of the method, which is performed by a transmitter of a master transceiver of the radio communication system, additionally comprises:
- receiving from an external-clock source an external-clock signal having an external-clock frequency;
- dynamically adapting, using the external-clock signal, a frequency of the transmitter-reference-clock signal for adapting the symbol clock frequency and the transmitter carrier frequency.

The external-clock signal is in one variant a fieldbus clock signal. Depending on the application, a fieldbus clock frequency can be between 1 kHz and 10 MHz, which allows an accuracy of up to 100 ns. The transmitter-reference clock signal of the master node, and thus also the clocks of any slave node, is thus adapted to be synchronized with the external clock. This is preferably done using a process that the slave nodes use to lock their clock to the master node clock, and that will be described further below with reference to the second aspect of the present invention. In a nutshell, a quartz-stabilized PLL that synchronizes to the external-clock signal can be used. As a result of the adaptation of the transmitter-reference-clock signal to the external-clock signal, the carrier frequency employed by the master and, as a consequence, the carrier frequency employed by any slaves of the radio communication system are also adapted to be synchronized with the external-clock signal.

In such embodiments which are suitable for adaptation to an external-clock signal and which further comprise including a cyclic prefix in all payload data symbols, operating the transmitter of a master transceiver of the radio communication system additionally comprises dynamically adapting, using the external-clock signal, a length of the cyclic prefix for synchronizing the symbol clock frequency of the transmitter with respect to the external-clock frequency.

### Second Aspect of the Invention: Method for Operating a Slave Radio Receiver

A second aspect of the present invention is formed by a method for operating a receiver of a slave radio transceiver of a radio communication system in synchronizing carrier frequencies with a transmitter of a master transceiver of the radio communication system in accordance with claim 5.

By means of the described generation of the slave-receiver carrier signal, which involves an adaptation of the receiver's carrier frequency, the method of the second aspect of the invention eliminates the cause of the problem of carrier-frequency offset using only the received signal conveying the payload data symbols, without requiring a preamble symbol.

The method includes a generation of a reconstruction of the symbol-clock signal used by the master transceiver, using only the received signal comprising the payload data symbols. Using this received signal, a reconstructed symbol-clock signal having a reconstructed symbol clock frequency that equals the symbol clock frequency used by the master transceiver is generated. As explained in the context of the method of the first aspect of the invention, the symbol-clock frequency and the transmitter carrier frequency are both derived from the same transmitter-reference-clock signal. Since the symbol clock frequency is visible for the receiver due to a use of the method of the first aspect for transmitting the payload data symbols to the slave radio transceiver, it is possible for the receiver of the slave to use reconstruct the symbol clock frequency and use it for generating the slave-receiver carrier signal with a receiver carrier frequency that is in synchrony with the current transmitter carrier frequency.

Even if the receiver has fallen out of synchronization, a re-synchronization can be achieved using this method, without interrupting data transmission.

The method turns away from the described known approach that uses a Costas loop, where the difference between transmitter and receiver frequency is preserved. Furthermore, in contrast to such known synchronization methods using a Costas loop, the method is not dependent on the used modulation scheme and allows a free choice of modulation.

The method also achieves a synchronization of the slave transceiver in the uplink, according to the prior art, the frequency offset had to be corrected by a phase correction at the respective slave. This step can now be omitted by adjusting the carrier frequency of the transmitter.

Based on the common concept underlying the different aspects of the invention, the generation of the reconstructed symbol-clock signal on the receiver side not only has the advantage of allowing synchronization of the carrier frequency, but in different preferred embodiments also allows performing chip synchronization, symbol synchronization, a particularly simple method of channel estimation, and an equally simple method of channel correction.

In the following, embodiments of the method of the second aspect will be described.

Preferred embodiments perform detection of a beginning of a payload data symbol by detecting a sudden rise of de-correlated received signal immediately after a respective constant signal section formed by several constant chip values caused by the guard section.

Determining the respective starting point this way preferably comprises determining a point in time associated with a peak that forms a maximum of the received baseband signal at an end of the sudden rise.

Based on this concept, generating the reconstructed symbol-clock signal comprises in one embodiment:
- detecting a plurality of starting points of payload data symbols in the de-correlated received signal, comprising identifying as a respective starting point a respective sudden rise of the de-correlated received signal immediately after a respective constant signal section formed by several constant chip values caused by the guard section; and
- using a plurality of the detected starting points of the payload data symbols for determining the reconstructed symbol clock frequency.

Using this method, the symbol clock frequency can for instance be determined by determining the inverse of a time span elapsed between a pair of two neighbouring detected starting points. The accuracy of determining the symbol clock frequency can be increased by averaging, and/or by determining the inverse of a time span between two starting points that are more distant from each other, scaled using the number of starting points detected between these two.

Determining the point in time associated with the peak comprises the following steps in some embodiments:
- upon detecting an onset of the sudden rise, sampling the current de-correlated received signal with a frequency higher than a predetermined chip frequency for a time interval that comprises the peak, thus obtaining a sampled peak signal section;
- determining a fit curve fitting the sampled peak signal section;
- determining the point in time associated with the peak as that point in time which is associated with a maximum of the fit curve.

With respect to the mentioned sampling step, typical implementations include performing both a linear and a cyclic correlation for decoding the signals. The linear correlation step is performed before the cyclic correlation step and advantageously uses a sampling frequency higher than that of the cyclic correlation, and higher than the chip frequency. The oversampling in the first, linear correlation step provides several measuring points for one and the same chip value. An ideal sampling time is then determined, which is used to scan the chip value centrally in the second correlator. To determine this ideal sampling time, a fit curve through the measuring points of the first peak is preferably determined and the measuring point of the point in time associated with the maximum of the best fit curve is selected as the sampling time. Such implementations achieve a particularly accurate chip synchronization.

In further embodiments, determining the de-correlated received signal comprises using the frequency of the reconstructed symbol clock signal for timing the provision of the respective predetermined code words of the cyclic code for determining a convolution of the down-converted received signal with the respective predetermined code words. The convolution of the down-converted received signal with the respective predetermined code words is not cyclic, so it does not correspond to the general decoding of the PSSS symbols, but is performed in addition. This embodiment is advantageous in that the use of the frequency of the reconstructed symbol clock signal for timing the provision of the code words achieves a particular good overlap of the code words with the down-concerted received signal.

In further embodiments, herein referred to as "slave-reference-signal embodiments", generating the slave-receiver carrier signal in the downlink comprises using the reconstructed symbol-clock signal for generating a periodic slave reference signal that has a slave reference frequency which is positively related to the symbol-clock frequency, and using the slave reference signal for generating the slave-receiver carrier signal. Generating the periodic slave reference signal as an intermediate step in the process of generating the slave-receiver carrier signal is advantageous for synchronizing further processes in a slave transceiver with the master transceiver, in addition to the generation of the slave-receiver carrier frequency.

In particular, some variants of this embodiment additionally include the generation of a slave-transmitter carrier frequency for achieving carrier synchronization also in uplink communication. In such variants, the method of the first aspect of the invention is performed by a transmitter of a slave transceiver of the radio communication system. The method further comprises
- the slave transceiver additionally performing the method of the above-mentioned slave-reference-signal embodiment;
- using the slave reference signal for additionally generating a slave-transmitter carrier signal that has a slave-transmitter carrier frequency which is positively related to the slave reference frequency;
- using the slave-transmitter carrier signal for transmitting the payload data symbols via the radio channel of the radio communication system.

Other variants based on the slave-receiver-reference-signal embodiment additionally comprise a generation of a digital slave-transceiver clock frequency for controlling operation of the slave transceiver, in particular the operation of baseband processing including the use of the achieved synchronization on the transmitter side for symbol and chip timing. A suitable slave-transceiver clock frequency for instance amounts to 120 MHz, to give a nonlimiting example.

Suitably, the additional frequencies such as that of the slave-transmitter carrier signal and that of the digital slave-transceiver clock frequency are generated using respective sub-ordinate phase-locked loops, suitably in an analogue front end of the slave transceiver.

The achieved accurate synchronization between master and slaves is particularly advantageous, if a closed loop radio system is employed. "Closed loop" radio communication refers to a radio communication of payload data between radio transceivers in which respective payload data is continuously transmitted in both directions. This is in contrast to most radio systems, in which payload data is transmitted only when required and after checking a transmission channel beforehand ("listen before talk"). Closed-loop radio systems are often used in industrial applications and typically have a master node and a plurality of slave nodes in the uplink. In PSSS closed loop radio systems, it is also desired that the PSSS symbols of the slave nodes arrive at the receiver of the master node with as little displacement as possible, i.e., synchronized. The chip values of the different slave nodes are only allowed to be shifted against each other by a minor time span that is significantly under a chip duration, so that the actual superimposed chip value can still be sampled.

### Third Aspect of the Invention: Radio Transmitter

According to a third aspect, a radio transmitter for exchanging payload data symbols via a radio channel of a radio communication system in accordance with claim 11.

The radio transmitter of the third aspect shares the advantages of the method for operating a radio transmitter according to the first aspect of the invention.

Embodiments of the radio transmitter are configured to operate in accordance with corresponding embodiments of the method of the first aspect, in particular as defined above and in the dependent claims.

In particular, in one embodiment of the radio transmitter that is suitable for incorporation into a master transceiver, the transmitter clock unit is configured, for operation of the radio transceiver as a master transceiver of the radio communication system,
- to receive from an external-clock source an external-clock signal having an external-clock frequency, and
- to dynamically adapt, using the external-clock signal, a frequency of the transmitter-reference-clock signal for adapting the symbol clock frequency and the transmitter carrier frequency.

Therefore, in operation of a radio communication system employing this embodiment of the radio transmitter, the transmitter-reference clock signal of the master, and as a consequence also the respective slave reference signals of any slave nodes, are synchronized with the external-clock signal, such as a fieldbus signal, received by the master transceiver.

In particular, the master transceiver comprises an oscillator unit which comprises a super-ordinate PLL-controlled oscillator which receives the external-clock signal and is configured to generate the transmitter-reference-clock signal with a frequency that is positively related to the external-clock frequency. A first sub-ordinate PLL controlled oscillator receives the transmitter-reference-clock signal, and is configured to use it for controlling the generation of the transmitter- or receiver carrier signal of the master transceiver. In transceivers having transmitter and receiver carrier frequencies differing from each other, two sub-ordinate PLL controlled oscillators are used for generating the different carrier frequencies. Thus, each of these two sub-ordinate PLL controlled oscillator generates a respective one of the transmitter and receiver carrier signals. Suitably, the master transceiver also has a further sub-ordinate PLL controlled oscillator for generating a master transceiver baseband clock signal.

### Fourth Aspect of the Invention: Slave Transceiver

A fourth aspect of the invention is formed by a slave transceiver for receiving a radio signal that represents a plurality of payload data symbols continuously transmitted by a master transceiver of a radio communication system in accordance with claim 13.

The slave transceiver of the fourth aspect shares the advantages of the method for operating a receiver of a slave radio transceiver of a radio communication system according to the second aspect of the invention.

Embodiments of the slave transceiver are configured to operate in accordance with corresponding embodiments of the method of the second aspect, in particular as defined above and in the dependent claims.

In a further embodiment of the slave transceiver, the oscillator unit comprises a super-ordinate PLL-controlled oscillator which receives the reconstructed symbol-clock signal and is configured to generate a slave reference-clock signal that has a reference-clock frequency that is positively related to the reconstructed symbol-clock frequency. A first sub-ordinate PLL controlled oscillator receives the reference-clock signal, for generating the slave-receiver carrier signal. The slave-receiver carrier frequency is generated with a positive relation to the reference-clock frequency. A second sub-ordinate PLL controlled oscillator is provided for generating a slave transceiver baseband clock signal.

A further embodiment of the slave transceiver comprises
- a radio transmitter according to the third aspect and configured for operation as a slave radio transmitter; wherein
- the oscillator unit is connected with the transmitter clock unit to provide the slave reference-clock signal as the transmitter reference-clock signal; and wherein
- the oscillator unit further comprises a third sub-ordinate PLL controlled oscillator for generating the transmitter carrier signal with the transmitter carrier frequency, the transmitter carrier frequency being positively related to the reference-clock frequency.

In the following, further embodiments will be described with reference to the enclosed drawings. In the drawings,
Fig. 1 is an illustration of a radio communication system having a star topology;
Fig. 2 shows a schematic illustration of a frame structure according to the prior art, as used for downlink and uplink transmission with PSSS coding in a prior-art closed-loop radio communication system of Fig. 1;
Fig. 3 is a schematic illustration of a sequence of payload data vectors generated by a radio transmitter for transmission via a radio channel according to an embodiment of a method of the present invention;
Fig. 4 is a flow diagram showing an embodiment of a method for operating a radio transmitter of a radio transceiver in transmitting payload data symbols via a radio channel of a radio communication system;
Fig. 5 is a flow diagram showing an embodiment of a method for operating a receiver of a slave radio transceiver of a radio communication system in synchronizing carrier frequencies with a transmitter of a master transceiver of the radio communication system;
Fig. 6 illustrates relevant parts of an exemplary PSSS radio communication system, including a master transceiver and one or more slave transceivers;
Fig. 7 is an illustration of a shift of chip values of different slave nodes;
Fig. 8 illustrates a comparison in the signal handling after the first correlator between a prior art solution and the structure proposed as an embodiment in the present specification; and
Fig. 9 is an IQ diagram for illustration of an embodiment of a decoding method for decoding payload data.

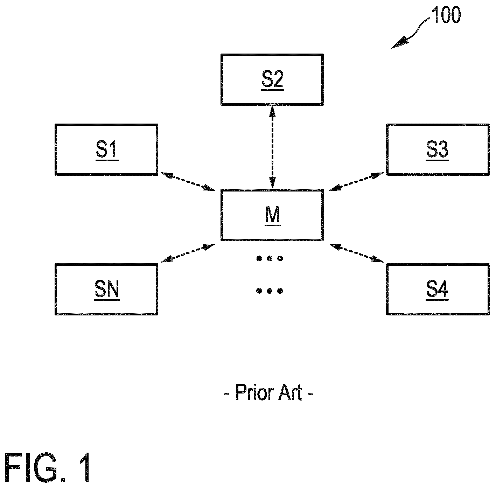

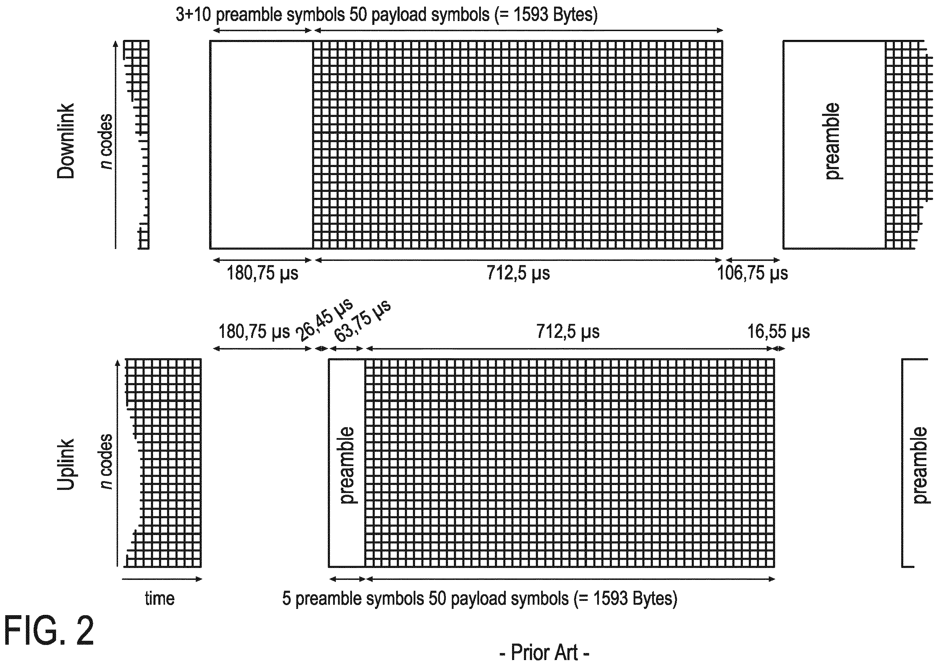

The following description first turns to Figs. 1 and 2 in parallel.

Fig. 1 is an illustration of an exemplary radio communication system 100. The radio communication system 100 under consideration has a star topology with one master M and several slaves Si = S1, S2, S3, S4, ..., SN. This topology is per se known and also forms a basis for embodiments of the present invention described herein. In this topology, a downlink channel is a radio channel for communication in a direction from the master M to one or more of the slaves S1, ..., SN, and an uplink channel is a radio channel for communication in a direction from one of the slaves S1, ..., SN to the master M. Radio channels are indicated as double arrows for simplicity, without implying that the same physical resources are necessarily used in both directions. Typically, different radio frequencies are used for transmission in uplink and downlink channels.

Fig. 2 shows a schematic illustration of a frame structure according to the prior art, as used for downlink and uplink transmission with PSSS coding in a prior-art closed-loop radio communication system. The horizontal axis indicates the time and thus shows a chronological sequence of PSSS symbols. The two frames sent in uplink and downlink are transmitted almost simultaneously.

In payload data symbols, a plurality of chips encoding payload data plus a cyclic addition are transmitted, as indicated along the vertical axis. In addition, special preamble symbols are transmitted. A large gap of 180,75+26,45 microseconds before an uplink frame is used for channel estimation.

The downlink has a relatively unproblematic broadcast situation. During the preamble, each slave independently performs a synchronization and channel estimation and then uses this information to decode the received payload data symbols. This forms a usual procedure in a packet-based PSSS procedure.

In the uplink, the situation is much more complicated because several slaves can transmit at the same time. On the one hand, the slaves must be precisely synchronized, taking into account the different distances to the master. Synchronization techniques are known as such and will not be described herein. On the other hand, channel correction in the uplink is problematic. At the antenna of the master receiver, there is a superposition of partial signals received from the different slaves. Each of these partial signals has been distorted by a different radio channel. In the prior art, this issue is handled by inversely pre-distorting the signal to be transmitted from each slave. After transmission, the original, unaltered signal is detected by the master and can therefore be easily superimposed with the other incoming signals.

However, in known prior art systems, the slave has evaluated channel coefficients of the uplink channel using the downlink channel and thus the downlink frequency, while it has to pre-distort the transmission using (actually unknown) coefficients for the uplink frequency. One known solution is to briefly switch to the uplink frequency within the downlink preamble. The slaves evaluate the channel coefficients for the uplink in this time interval. Another solution is to swap frequencies between uplink and downlink, as will be described in more detail further below.

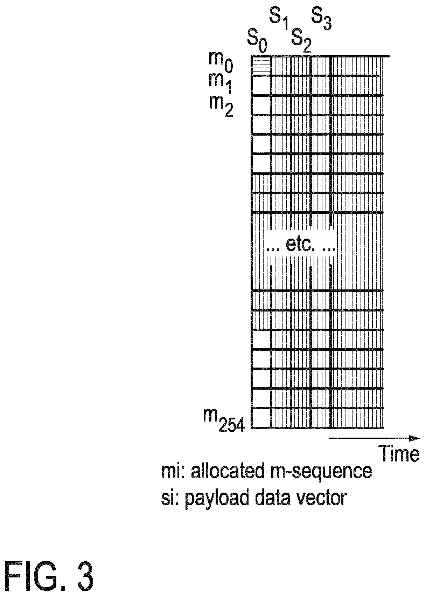

Fig. 3 is a schematic illustration of a sequence 300 of payload data vectors generated by a radio transmitter for transmission via a radio channel according to an embodiment of a method of the present invention.

According to the structure shown, payload data vectors of a predetermined length are formed, each including a respective fraction of payload data to be transmitted payload data is encoded as a linear combination of m-sequences according to a parallel sequence spread spectrum (PSSS) technology. Time is again shown on the horizontal axis. A code family of code words in the form of m-sequences m0, m1, m2, ....... is generated by cyclically shifting an underlying m-sequence m0. These codes have particularly good orthogonality properties. For instance, a code with the length 255, i.e. 255 chips, is used. The code family then contains 255 m-sequences. Codes with length 511, 1023, ... etc. are used in different embodiments.

The vertical axis in the illustration of Fig. 3 is thus assigned to the different code words, such as m0, m1, m2, ..., m254 in the present example. Other code lengths are possible. Thus, a "virtual channel" is provided with each code word. The data is transmitted in parallel in these 255 channels.

Data is encoded by a corresponding number of payload data values specifying the coefficients of a respective linear combination of the code words. With BPSK coding, the coefficients of the linear combination are +1 or -1. This allows one bit to be transmitted in each resource element, i.e., each box in the illustration. Higher modulation methods could transfer more bits per resource element and can be used in other embodiments.

Continuous transmission in both directions is ensured by using two different frequency bands for downlink and uplink.

The radio receiver calculates a correlation of the incoming signal with the codes in the baseband to extract the data. Due to the cyclic rotation a single correlator is sufficient, which generates the correlation values for m0, m1, m2... one after the other.

Continuous transmission in both directions is ensured by using two different frequency bands for downlink and uplink.

In known prior-art closed-loop radio systems, the transmission of payload data is interrupted by a preamble. This preamble fulfils two tasks:
(1) Synchronize the receiver with the transmitter,
(2) Determination of a channel estimation.

According to the present invention, however, pilot codes, also referred to as pilot sequences in the payload data symbols are used for chip and symbol synchronization. These pilot codes or pilot sequences, depending on requirements, are transmitted in each symbol or alternatively in larger intervals. In the symbol structure illustrated in Fig. 3, the pilot code m0 is shown by horizontal hatching.

Unused codes in the same symbol are indicated by no hatching (white boxes) and referred to as the "guard interval". The guard interval in symbol is used for channel estimation. Other codes are used for transmitting payload data and are illustrated by vertical hatching.

The radio technology used employs PSSS (parallel sequence spread spectrum). The data is coded as a linear combination of m-sequences. The code family m0, m1, m2, ....... is generated by cyclically shifting an underlying m-sequence m0. These codes have particularly good orthogonal properties. In an exemplary embodiment, a code with 255 chips is used. The family contains 255 sequences. Other lengths 2^p-1 are possible. Data is encoded by 255 data values specifying the coefficients of the linear combination.

The radio receiver calculates a correlation of the incoming signal with the codes in the baseband to extract the data. Due to the cyclic rotation a single correlator is sufficient, which generates the correlation values for m0, m1, m2... one after the other.

With multipath reception, the receiver decodes several superimposed, delayed copies of the transmitted signal. The PSSS codes are cyclic shifts of the first code m0. A delayed code is thus identical to a code with a higher index, modulo 255. So the delayed code of m254 is m0, m1,... etc. For example, with respect to the code m0 transmitted in the box marked red (to be translated to horizontal hatching) after decoding, the receiver will detect
(1) a contribution at the same position in the diagram that originates from the line-of-sight transmission, and
(2) additional contributions below the red box that originate from the delayed signal paths. These values are used as the channel coefficients.

The distortion through the channel operates on each code in the symbol in a similar way. The received data are thus the convolution of the transmitted data with the vector of the channel coefficients. In this vector, only a few components at the beginning are relevant and have values different from zero. This number of relevant components is referred to as K in the following. The number K can be estimated from the geometry of the system, the speed of light and the chip duration. The exact number is given by the real channel. However, in practice and for chip durations in today's usual range of 20 - 50 ns, no more than 5 codes before and 5 codes after the channel estimation value are required. The diagram in Fig. 3 was drawn for the case K = 5.

In detail, the situation is as follows.

The code m0 is transmitted and embedded between code elements at the beginning of the symbol S0 and at the end of the code sequence forming the payload data symbol S0, which are not used for payload data transmission by the radio transmitter, if the channel estimation is to be carried out by the radio receiver in a given payload data symbol. Instead the corresponding values of the payload data vector are filled with a reference value, suitably zero (0). In the decoded values for m1, m2, ..., mK the values of the channel estimation are then obtained.

In the same symbol all elements illustrated with vertical hatching can thus be used for encoding payload data. In this way, a channel estimation without interruption of the payload data transmission is achieved. In other words, no preamble is required for channel estimation.

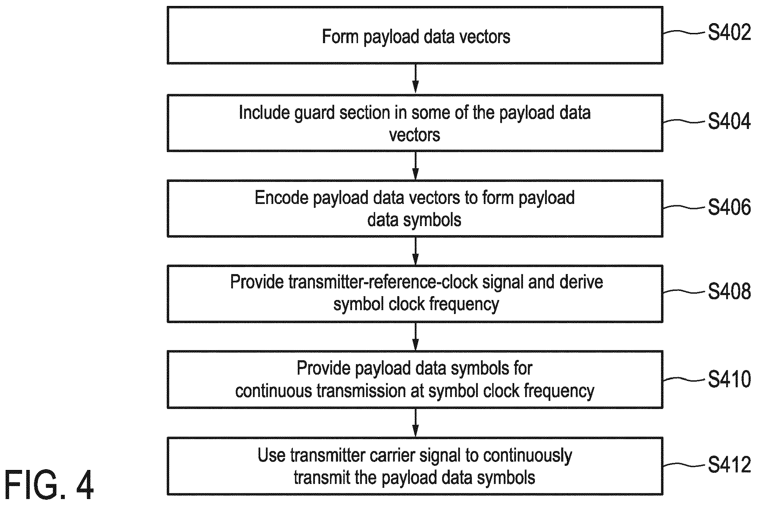

As illustrated in Fig. 4, in an embodiment of a method for operating a radio transmitter of a radio transceiver in transmitting payload data symbols via a radio channel of a radio communication system, the following steps are performed for transmitting payload data.

In a step S402, payload data vectors of a predetermined length are formed, each including a respective fraction of payload data to be transmitted.

In a step S404, in at least one of the payload data vectors, in addition to the respective fraction of the payload data, a guard section is included, which is formed by a pilot value embedded between two multiple-repetition sequences of a reference value, which is preferably 0. The rate of included guard sections in the payload data symbols during a given time span is selectable and can be adapted dynamically. The rate is suitably chosen in dependence on the conditions of the communication channel, in particular with respect to synchronization and channel estimation.

In a step S406, the payload data vectors are encoded to generate payload data symbols as encoded coefficient vectors, by determining respective products of the respective payload data vectors and a code matrix of mutually orthogonal code words of a cyclic code, using a Parallel Sequence Spread Spectrum coding scheme, wherein the pilot value is encoded as a pilot code using a predetermined channel-estimation code word of the cyclic code.

In a step S408, a transmitter-reference-clock signal is provided. The transmitter-reference-clock signal is generated internally by the transmitter. In other embodiments, the transmitter-reference-clock signal is received from an external clock source, such as a fieldbus clock. From this transmitter-reference-clock signal a symbol clock frequency and a transmitter carrier frequency are derived. From the transmitter-reference-clock signal, a symbol clock frequency is derived.

Furthermore, in a step S410, the payload data symbols are provided for continuous transmission via the radio channel at the symbol clock frequency.

In a step S412, a transmitter carrier signal that has the transmitter carrier frequency is used to continuously transmit the payload data symbols via the radio channel. The transmitter-carrier signal is suitable derived from the transmitter-reference-clock signal.

Suitably, a cyclic prefix is included in all payload data symbols.

Providing the payload data symbols for transmission via the radio channel of the radio communication system in this way achieves the advantage of allowing an external radio receiver performing a carrier synchronization, and in preferred embodiments also a chip synchronization and a symbol synchronization.

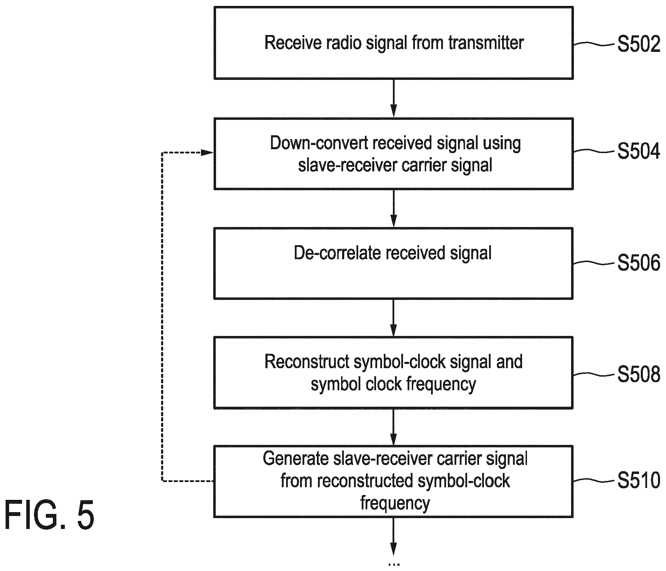

To use the symbol structure sketched in Fig. 3 for carrier synchronization, a receiver of a slave radio transceiver of a radio communication system suitably performs the method embodiment according to Fig. 5, including the following steps for synchronizing carrier frequencies with a transmitter of a master transceiver of the radio communication system:
In a step S502, the slave radio transceiver receives from the transmitter of the master transceiver a radio signal representing a plurality of payload data symbols continuously transmitted at a symbol-clock frequency and a symbol-clock phase, wherein the payload data symbols are as illustrated in Fig. 3. In other words, each of the payload data symbols encodes a respective fraction of payload data as a coefficient vector using a Parallel Sequence Spread Spectrum coding scheme. The coefficient vector represents a product of a respective payload data vector of a predetermined length and a code matrix of predetermined mutually orthogonal code words of a cyclic code. The received signal comprises a guard section having a pilot code embedded between two multiple-repetition sequences of an encoded reference value.

In a step S504, a slave-receiver carrier signal of a slave-receiver carrier frequency is used for down-converting the received signal to obtain a down-converted received signal.

In a step S506, a de-correlated received signal is determined by determining a convolution of the down-converted received signal with the respective predetermined code words of the cyclic code.

In a step S508, the de-correlated received signal is used to generate a reconstructed symbol-clock signal having a reconstructed symbol clock frequency.

In a step S510, the slave-receiver carrier signal is generated as a periodic output signal that has a slave-receiver carrier frequency which is positively related to the reconstructed symbol clock frequency. The ratio between the symbol clock frequency and the carrier frequency is a known design parameter of a given PSSS radio communication system. The generated slave-receiver carrier signal is fed back to the down-conversion step 504, thus providing a slave-receiver carrier signal that is synchronized with the transmitter via the symbol clock frequency measured in the received radio signal. This feed-back loop for synchronization of the slave-receiver carrier signal is indicated by a dashed line in Fig. 5. The dashed line is not meant to indicate that the receiver does not proceed with the baseband processing of determining the received payload data. However, the further steps for determining the payload data are per se known and for that reason not shown in detail, but only indicated by "..." in Fig. 5.

In a start-up phase of this method, only the pilot codes are required and can thus be transmitted by the master without including payload data. This allows the system to synchronize reliably before the payload data codes are added.

The disadvantages of the known prior art that are overcome by synchronizing the carrier frequencies without using a preamble or Costas loop are substantial. As mentioned earlier, a preamble interrupts the data flow and leads to a lower data rate with increased latency. Furthermore, the design of the Costas loop is determined by the modulation procedure. This means that the system is not variable in modulation. In addition, the Costas loop compensates for the effects of frequency offset without eliminating the offset itself. Unlike the Costas loop, where the difference between transmitter and receiver frequency is thus preserved, the described loop involved in steps 502 to 510 eliminates the cause of the problem by changing the receiver's carrier frequency.

The method involves a continuous measurement of the symbol clock sent out by the master node. Because the symbol clock remains clearly visible even during data transmission, it is possible for a slave that has fallen out of synchronization to re-synchronize without interrupting data transmission.

There is no need of quickly locking to a target frequency. After a start-up phase, the radio communication system is operated continuously with unchanged digital clocks. Therefore, a low pass with a low cut-off frequency can be used as a loop filter in preferred embodiments. As a result, only slow regulation is performed, which compensates for jitter in the control pulses and limits phase noise. This effect may be large enough that the pilot code does not have to be sent out in every symbol. Instead, in one example it is sent out at longer regular intervals. This measure further increases the useful data rate.

The synchronization method is not dependent on the used modulation scheme and allows a free choice of modulation.

In the uplink, according to the prior art, the frequency offset had to be corrected by a phase correction at the respective slave. This step can now be omitted by adjusting the carrier frequency of the transmitter.

A system employing a preamble could also be used, of course. In that case, the frequency offset would be measured in the preamble, and this value would be used in the data frame to compensate for the effect without further readjustment. Then any modulation scheme could be used in the data frame.

It should thus be noted that the described synchronization method embodiment and the described channel estimation method embodiment both make use of the described exemplary frame structure illustrated with respect to Fig. 3. However, while they both profit from the frame structure, they are in fact independent in that they each can be used alone in a radio communication system, to thus achieve only channel estimation or only carrier synchronization. They need not be used in combination. However, their combination forms a particular advantageous embodiment in that in the presence of multipath propagation, a preamble can only be omitted if a combination of both methods is used.

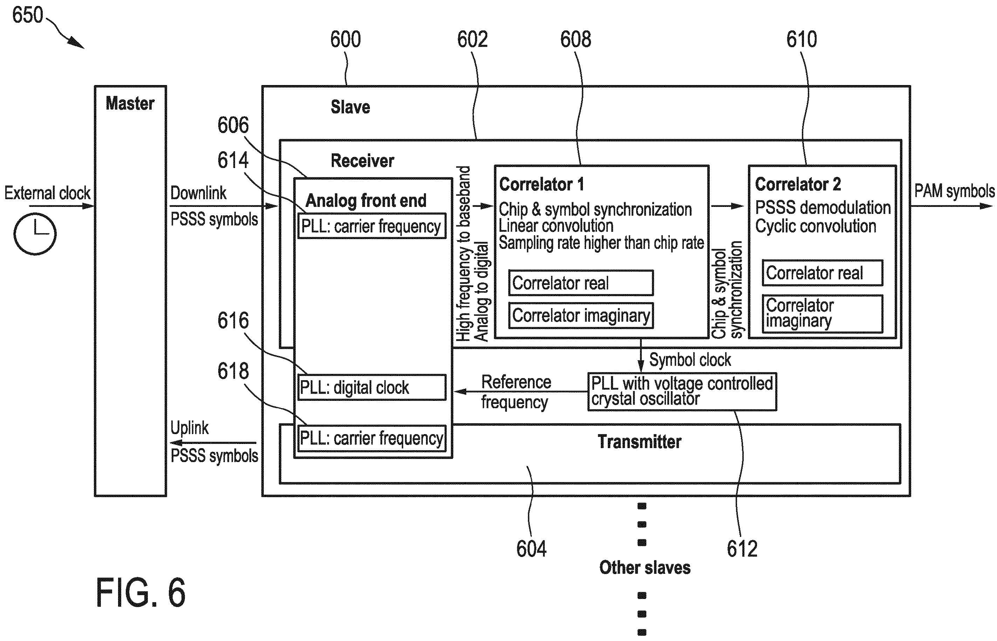

Fig. 6 is a schematic block diagram of a slave transceiver 600 for use in a PSSS radio communication system 650. The PSSS radio communication system further includes a mater transceiver 652 and may in addition to the slave transceiver 600 comprises an arbitrary number of further slave transceivers of the same type.

The slave transceiver has a receiver part 602 and a transmitter part 604. A receiver unit in an analogue front end 606 of the receiver part 602 serves for reception and transmission of radio signals. The receiver unit uses a slave-receiver carrier signal for down-converting the received radio signal and to obtain a down-converted received signal. Further details of the analogue front end 606 will be described further below.

A first correlator 608 ("correlator 1") is provided for measuring a symbol-clock amount and phase from the received signal. A second correlator 610 ("Correlator 2") is configured to determine a de-correlated received signal as a convolution of the down-converted received signal with the respective predetermined code words of the cyclic code.

The first correlator 608 generates and provides a control voltage for a super-ordinate phase-locked loop (PLL) 612 with a voltage-controlled crystal oscillator (VCXO), which control voltage is derived from the symbol clock measured from the received signal. This super-ordinate PLL 612 generates a reference clock signal with a reference frequency, from which three different other frequencies are generated in the analogue front end 606, using three sub-ordinate PLLs 614, 616, and 618.
- a digital clock with which the whole slave transceiver 600 is operated;
- a slave-receiver carrier frequency of the receiver of the slave transceiver 600, and, optionally; and
- a slave-transmitter carrier frequency of the transmitter of the slave transceiver 600.

This provides a continuous measurement of the symbol clock sent out by the master node to control the higher-level PLL via the pilot code. Because the symbol clock remains clearly visible even during data transmission, it is possible for a slave that has fallen out of sync to synchronize without interrupting data transmission to the other slave nodes.

Unlike the Costas loop, where the difference between transmitter and receiver frequency is preserved, the proposed design thus eliminates the cause of the problem by changing the receiver's carrier frequency.

After the start-up phase, the closed-loop radio system 650 is operated continuously with unchanged digital clocks. Therefore, a low pass with a low cut-off frequency is used as a loop filter in preferred embodiments. As a result, the super-ordinate PLL 612 regulates only slowly, which compensates for jitter in the control pulses and limits phase noise. This effect may be large enough that the pilot code does not have to be sent out in every symbol. Instead, it is sent out at larger regular intervals. This further increases the useful data rate.

In the uplink, according to the prior art, the frequency offset had to be corrected by a phase correction at the respective slave. This step can now be omitted by also adjusting the carrier frequency of the transmitter of the slave transceiver, as described, using the measured symbol clock frequency of the master.

A PSSS radio communication system employing a preamble could, of course, measure the frequency offset in the preamble and use this value in the data frame to compensate for the effect without further readjustment. Then any modulation scheme could be used in the data frame. However, in absence of a preamble, the PLL is essential.

The synchronization method is not dependent on the used modulation scheme and allows a free choice of modulation.

The exemplary symbol structure shown in Fig. 3 can also be used for chip and symbol synchronization. This has the advantage that no separate preamble is required.

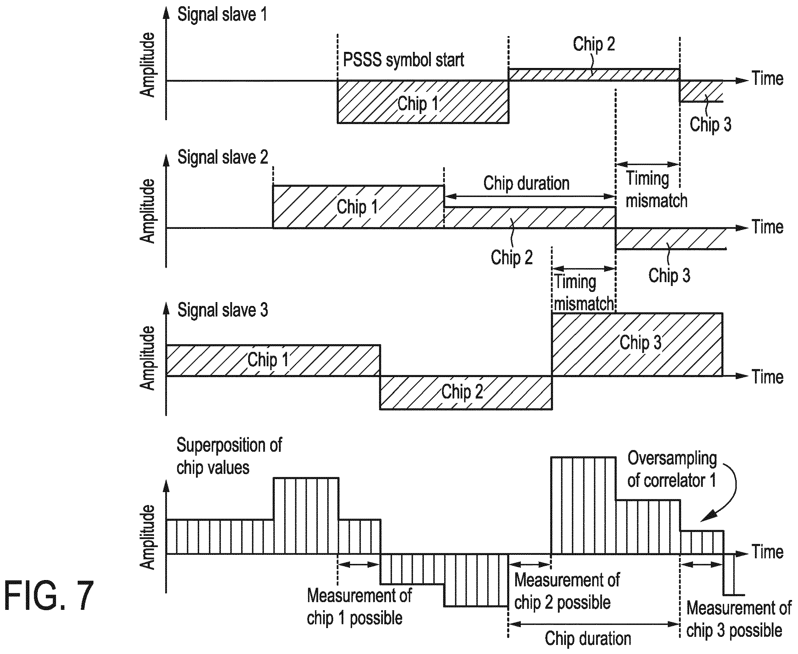

Fig. 7 is an illustration of a shift of chip values of different slave nodes by a minor time span that is significantly under a chip duration, so that the actual superimposed chip value can still be sampled.

While the downlink has a relatively unproblematic broadcast situation, the situation is much more complicated in the uplink because several slaves can transmit at the same time. The slave nodes must be synchronized with the master node, taking into account the different distances to the master node. The illustration shows the mutual shift between the chips received from different slaves and illustrates the necessity of keeping the shift below a limit.

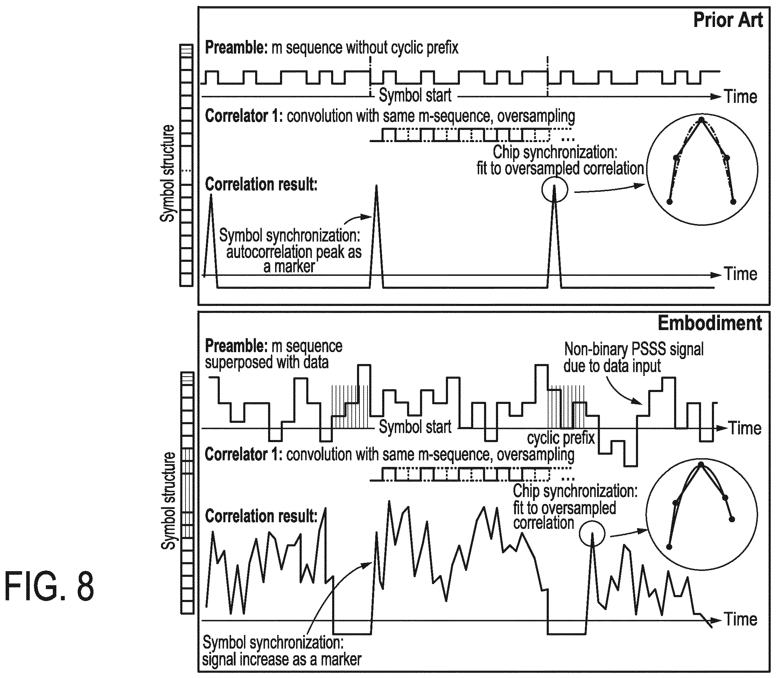

Fig. 8 is an illustration of the differences in the signal after the first correlator in a comparison between a prior art slave transceiver and the slave transceiver structure of Fig. 6 as an embodiment of the present invention.

Fig. 8 shows in the upper part the signal when according to the prior art m-sequences are sent in a preamble. There are clear peaks at the beginning of the symbols. By a fit around the maximum of the peak the chips can be synchronized. The accuracy of this fit depends on the sampling rate of the first correlator.

In the lower part, Fig. 8 additionally shows for comparison the signal using the symbol structure of Fig. 3. As received by a slave transceiver such as that of Fig. 6, the received signal allows identifying the beginning of a symbol by a sudden rise of the signal after several constant chip values. Identifying the respective starting points as the respective sudden rise of the de-correlated received signal is thus enabled by providing respective constant signal section formed by several constant chip values caused by the guard section. From a plurality of the detected starting points of the payload data symbols, the reconstructed symbol clock frequency can be determined. Determining the respective starting point suitably is performed by determining the point in time associated with the that forms the maximum of the received baseband signal at an end of the sudden rise, most suitably by determining and evaluating a fit curve. To this end, sampling the de-correlated received signal is performed with a frequency higher than the chip frequency for a time interval that comprises the peak, thus obtaining a sampled peak signal section, for which a fit curve is determined. The point in time associated with the peak is then identified as that point in time which is associated with a maximum of the fit curve.

In contrast to state-of-the-art technology, a cyclic prefix is also sent during chip and symbol synchronization - a separate preamble structure is to be avoided. Apart from channel effects, the cyclic prefix (meaningfully the length of the guard interval) and the first symbol, i.e. the pilot code, are decoded correctly. All other data points are distorted by the fact that the following symbol already flows into the autocorrelation. For the data points immediately following the pilot code, however, this influence is very small, so that the peak of the pilot code can still be used for chip synchronization as usual. The ascent to the decoded pilot code is used to recognize the symbol beginnings and thus for symbol synchronization.

Compared to the state of the art, the signal proposed here for synchronization is less clear and more distorted in the data points that follow the pilot code. However, it can be assumed that a PSSS signal that is so noisy that it can no longer be synchronized with the proposed method can also no longer be used for normal decoding.

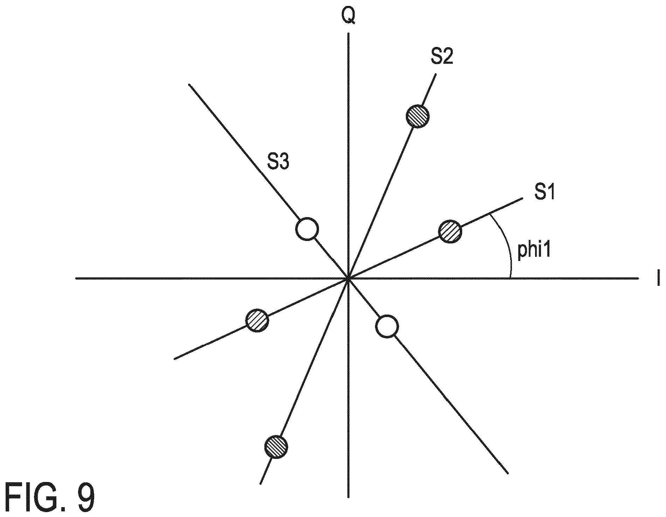

Fig. 9 is an IQ diagram for illustration of an embodiment of a decoding method for decoding payload data.

For decoding the payload data in the downlink, the signal of the master node in the receiver of the slave nodes can be turned into the real axis. Phase offset no longer plays a role. In the uplink, the signals of the slave nodes all arrive at the master node with a different phase offset. This signal cannot simply be rotated into the real axis. Instead, two separate correlators must be used for the real part (I) and the imaginary part (Q) of the signal to determine the current phase of the respective slave. All data points of a slave lie on a straight line of origin in the IQ diagram (Fig. 9). The phase cannot yet be read unambiguously (but modulo pi) from this line, because the sign of the respective data points is not known. Here the pilot code, which is known to have been sent with a positive sign, helps to resolve the phase ambiguity.

Compared to the state of the art, the method proposed here has the advantage that it does not require a preamble and that it is much more robust than a frequency offset, since both the phase offset and the frequency offset can be measured during data transmission. According to the state of the art, the estimation of the frequency offset in the preamble becomes obsolete during the data frame.

Symbols in the down- and uplink are preferably transmitted continuously and in a regular symbol cycle. This is a prerequisite for the synchronization of the digital clocks by means of PLL. The frame structure is now merely a logical construction that bundles a fixed number of symbols into one unit.

The synchronization of the entire system to an external clock such as a fieldbus is therefore only possible if this external clock is an integer multiple of the symbol duration. With reference to typical system parameters of a known prior-art implementation, this would mean that the external clock can only be reproduced with a granularity of 14.25 µs.

In order to reproduce the external clock in the radio system more accurately, the following measures are proposed by the inventors:
a. The digital clock of the master node, and thus also the clocks of any slave node, is adapted to the external clock. This is done with the same procedure that the slave nodes use to lock their clock to the master node clock, i.e. with a quartz-stabilized PLL that synchronizes to the external clock. As a result, the carrier frequencies are also shifted to a certain extent from their nominal values. However, the misfit is estimated to be less than one percent. For example, given 70 symbols per 1 ms of external clock, a shift would be a maximum of 0.5 symbols / 70 symbols = 0.7 %.
b. The length of the cyclic addition can be adjusted, adjusting the symbol duration. In the example above, an additional padding of one chip in each of 70 symbols would result in a time difference of 70 * chip duration = 70 * 50 ns = 3.5 µs. This granularity is an improvement over the mentioned 14.25 µs symbol duration.

Procedure a. allows an accurate adaptation to the external clock without system-related granularity. It may be appropriate to combine both procedures. In this way the shift of the carrier frequencies could be reduced.

In summary, for synchronizing the carrier frequencies of transceivers in a radio communication system the master transceiver generates a radio signal representing a plurality of payload data symbols continuously transmitted at a symbol-clock frequency and a symbol-clock phase. The payload data symbols each encode payload data, and some include a guard section having a pilot code embedded between two multiple-repetition sequences of an encoded reference value. The receiving transceiver uses the de-correlated received signal to generate a reconstructed symbol-clock signal having a reconstructed symbol clock frequency and generates a slave-receiver carrier signal as a periodic output signal that has a slave-receiver carrier frequency which is positively related to the reconstructed symbol clock frequency.

## Claims

1. A method for operating a radio transmitter of a radio transceiver in transmitting payload data symbols via a radio channel of a radio communication system to a radio receiver, the method comprising:
- forming (S402) payload data vectors of a predetermined length, each including a respective fraction of payload data to be transmitted;
- including (S404) in at least one of the payload data vectors, in addition to the respective fraction of the payload data, a guard section formed by a pilot value embedded between two multiple-repetition sequences of a reference value;
- encoding (S406) the payload data vectors to generate payload data symbols as encoded coefficient vectors, by determining respective products of the respective payload data vectors and a code matrix of mutually orthogonal code words (m₀, m₁, m₂, m₂₅₄) formed by cyclically shifted m-sequences of a cyclic code, using a Parallel Sequence Spread Spectrum coding scheme, wherein the pilot value is encoded as a pilot code using a predetermined channel-estimation code word (m₀) of the cyclic code;
- providing (S408) a transmitter-reference-clock signal and deriving from it a symbol clock frequency and a transmitter carrier frequency; and
- providing (S410) the payload data symbols (S₀, S₁, S₂, S₃) for continuous transmission via the radio channel at the symbol clock frequency, wherein the multiple-repetition sequences of the reference value are encoded such that the code words corresponding to the reference value are not used for encoding the respective fraction of payload data to be transmitted with the at least one payload data symbol that encodes the at least one payload data vector, in order to allow the radio receiver to continuously measure the symbol clock frequency and to perform carrier frequency synchronization with the transmitter without requiring an interruption of the reception of the payload data;
- using (S412) a transmitter carrier signal having the transmitter carrier frequency to continuously transmit the payload data symbols via the radio channel.

2. The method of claim 1, which is performed by a transmitter of a slave transceiver of the radio communication system and comprises:
- the transmitter transmitting the payload data symbols (S₀, S₁, S₂, S₃) via an uplink radio channel of the radio communication system to a master transceiver of the radio communication system; and
- the transmitter filling only a slave-specific data vector section of the payload data vectors, which is assigned unambiguously in the radio communication system only to the given slave transceiver, with the guard section and with the fraction of payload data that is to be encoded in the respective payload data symbol, and
- the transmitter filling any remaining section of the payload data vectors with the reference value.

3. The method of claim 1, which is performed by a transmitter of a master transceiver of the radio communication system and comprises:
- receiving from an external-clock source an external-clock signal having an external-clock frequency;
- dynamically adapting, using the external-clock signal, a frequency of the transmitter-reference-clock signal for adapting the symbol clock frequency and the transmitter carrier frequency.

4. The method of claim 1, which is performed by a transmitter of a master transceiver of the radio communication system, and wherein deriving the symbol clock frequency comprises:
- including a cyclic prefix in all payload data symbols (S₀, S₁, S₂, S₃);
- receiving from an external-clock source an external-clock signal having an external-clock frequency;
- dynamically adapting, using the external-clock signal, a length of the cyclic prefix for synchronizing the symbol clock frequency with respect to the external-clock frequency.

5. A method for operating a receiver of a slave radio transceiver of a radio communication system in synchronizing carrier frequencies with a transmitter of a master transceiver of the radio communication system, the method comprising:
- receiving (S502) from the transmitter of the master transceiver a radio signal representing a plurality of payload data symbols continuously transmitted at a symbol-clock frequency and a symbol-clock phase, wherein the payload data symbols each encode a respective fraction of payload data as a coefficient vector using a Parallel Sequence Spread Spectrum coding scheme, the coefficient vector representing a product of a respective payload data vector of a predetermined length and a code matrix of predetermined mutually orthogonal code words formed by cyclically shifted m-sequences of a cyclic code, the received signal comprising a guard section having a pilot code embedded between two multiple-repetition sequences of an encoded reference value, wherein the pilot code is obtained by encoding a pilot value using a predetermined channel-estimation code word of the cyclic code, wherein the multiple-repetition sequences of the reference value are encoded such that the code words corresponding to the reference value are not used for encoding the respective fraction of payload data to be transmitted with the at least one payload data symbol that encodes the at least one payload data vector, in order to allow the radio receiver to continuously measure the symbol clock frequency and to perform carrier frequency synchronization with the transmitter without requiring an interruption of the reception of the payload data;
- using (S504) a slave-receiver carrier signal for down-converting the received signal to obtain a down-converted received signal;
- determining (S506) a de-correlated received signal by determining a convolution of the down-converted received signal with the respective predetermined code words of the cyclic code;
- using (S508) the de-correlated received signal to generate a reconstructed symbol-clock signal having a reconstructed symbol clock frequency;
- generating (S510) the slave-receiver carrier signal as a periodic output signal that has a slave-receiver carrier frequency which is positively related to the reconstructed symbol clock frequency.

6. The method of claim 5, wherein generating the reconstructed symbol-clock signal comprises
- detecting a plurality of starting points of payload data symbols in the de-correlated received signal, comprising identifying as a respective starting point a respective sudden rise of the de-correlated received signal immediately after a respective constant signal section formed by several constant chip values caused by the guard section; and
- using a plurality of the detected starting points of the payload data symbols for determining the reconstructed symbol clock frequency.

7. The method of claim 6, wherein determining the respective starting point comprises determining a point in time associated with a peak that forms a maximum of the received baseband signal at an end of the sudden rise.

8. The method of claim 5, wherein determining the de-correlated received signal comprises
- using the frequency of the reconstructed symbol clock signal for timing the provision of the respective predetermined code words of the cyclic code for determining a convolution of the down-converted received signal with the respective predetermined code words.

9. The method of at least one of the claims 5 to 8, wherein generating the slave-receiver carrier signal comprises
- using the reconstructed symbol-clock signal for generating a periodic slave reference signal that has a slave reference frequency which is positively related to the symbol-clock frequency; and
- using the slave reference signal for generating the slave-receiver carrier signal.

10. The method of claim 1, which is performed by a transmitter of a slave transceiver of the radio communication system, comprising
- the slave transceiver additionally performing the method of claim 9;
- using the slave reference signal for additionally generating a slave-transmitter carrier signal that has a slave-transmitter carrier frequency which is positively related to the slave reference frequency;
- using the slave-transmitter carrier signal for transmitting the payload data symbols via the radio channel of the radio communication system.

11. A radio transmitter for exchanging payload data symbols via a radio channel of a radio communication system, the radio transmitter comprising:
- a transmitter clock unit configured to provide a transmitter reference-clock signal and to derive from it a symbol-clock frequency and a transmitter carrier frequency;
- a baseband unit, which is connected with the transmitter reference-clock unit and configured
- to form payload data vectors of a predetermined length, each including a respective fraction of payload data to be transmitted;
- to include in at least one of the payload data vectors, in addition to the respective fraction of the payload data, a guard section formed by a pilot value embedded between two multiple-repetition sequences of a reference value;
- to encode the payload data vectors and generate payload data symbols as encoded coefficient vectors, by determining respective products of the respective payload data vectors and a code matrix of mutually orthogonal code words formed by cyclically shifted m-sequences of a cyclic code, using a Parallel Sequence Spread Spectrum coding scheme, wherein the pilot value is encoded as a pilot code using a predetermined channel-estimation code word of the cyclic code and the multiple-repetition sequences of the reference value are encoded such that the code words corresponding to the reference value are not used for encoding the respective fraction of payload data to be transmitted with the at least one payload data symbol that encodes the at least one payload data vector, in order to allow the radio receiver to continuously measure the symbol clock frequency and to perform carrier frequency synchronization with the transmitter without requiring an interruption of the reception of the payload data;
- to provide the payload data symbols at the symbol clock frequency for continuous transmission via the radio channel; and
- a transmitter unit receiving the payload data symbols and using a transmitter carrier signal having the transmitter carrier frequency to continuously transmit the payload data symbols via the radio channel.

12. The radio transmitter of claim 11, wherein the transmitter clock unit is configured, for operation of the radio transceiver as a master transceiver of the radio communication system,
- to receive from an external-clock source an external-clock signal having an external-clock frequency, and
- to dynamically adapt, using the external-clock signal, a frequency of the transmitter-reference-clock signal for adapting the symbol clock frequency and the transmitter carrier frequency.

13. A slave transceiver for receiving a radio signal that represents a plurality of payload data symbols continuously transmitted by a master transceiver of a radio communication system, wherein
the payload data symbols each encode a respective fraction of payload data as a coefficient vector using a Parallel Sequence Spread Spectrum coding scheme, the coefficient vector representing a product of a respective payload data vector of a predetermined length and a code matrix of predetermined mutually orthogonal code words formed by cyclically shifted m-sequences of a cyclic code, and comprising a guard section having a pilot code embedded between two multiple-repetition sequences of an encoded reference value, wherein the pilot code is obtained by encoding a pilot value using a predetermined channel-estimation code word of the cyclic code, wherein the multiple-repetition sequences of the reference value are encoded such that the code words corresponding to the reference value are not used for encoding the respective fraction of payload data to be transmitted with the at least one payload data symbol that encodes the at least one payload data vector, in order to allow the radio receiver to continuously measure the symbol clock frequency and to perform carrier frequency synchronization with the transmitter without requiring an interruption of the reception of the payload data;
the slave transceiver comprising:
- a receiver unit, which is configured to use a slave-receiver carrier signal for down-converting the received radio signal and to obtain a down-converted received signal;
- a correlator unit, which is configured to determine a de-correlated received signal as a convolution of the down-converted received signal with the respective predetermined code words of the cyclic code;
- a symbol-clock reconstruction unit, which is configured, using the de-correlated received signal, to generate a reconstructed symbol-clock signal having a reconstructed symbol clock frequency; and
- an oscillator unit, which includes at least one controllable oscillator controlled by an associated phase-locked loop and which receives the reconstructed symbol-clock signal, the oscillator unit being configured to generate the slave-receiver carrier signal as a periodic output signal that has a slave-receiver carrier frequency which is positively related to the reconstructed symbol clock frequency.

14. The slave transceiver of claim 13, wherein
- the oscillator unit comprises a super-ordinate PLL-controlled oscillator which receives the reconstructed symbol-clock signal and is configured to generate a slave reference-clock signal that has a reference-clock frequency that is positively related to the reconstructed symbol-clock frequency;
- a first sub-ordinate PLL controlled oscillator that receives the reference-clock signal, for generating the slave-receiver carrier signal, the slave-receiver carrier frequency being positively related to the reference-clock frequency;
- a second sub-ordinate PLL controlled oscillator for generating a slave transceiver baseband clock signal.

15. The slave transceiver of claim 14, further comprising
- a radio transmitter according to claim 11 configured for operation as a slave radio transmitter; wherein
- the oscillator unit is connected with the transmitter clock unit to provide the slave reference-clock signal as the transmitter reference-clock signal; and wherein
- the oscillator unit further comprises a third sub-ordinate PLL controlled oscillator for generating the transmitter carrier signal with the transmitter carrier frequency, the transmitter carrier frequency being positively related to the reference-clock frequency.

## Patentansprüche

1. Verfahren zum Betreiben eines Funksenders eines Funktransceivers beim Übertragen von Nutzdatensymbolen über einen Funkkanal eines Funkkommunikationssystems an einen Funkempfänger, wobei das Verfahren umfasst:
- Bilden (S402) von Nutzdatenvektoren einer vorbestimmten Länge, von denen jeder einen jeweiligen Anteil von zu übertragenden Nutzdaten enthält;
- Aufnehmen (S404) eines Schutzabschnitts, der von einem zwischen zwei Mehrfach-Wiederholungssequenzen eines Referenzwerts eingebetteten Pilotwert gebildet wird, in mindestens einen der Nutzdatenvektoren zusätzlich zu dem jeweiligen Anteil der Nutzdaten;
- Codieren (S406) der Nutzdatenvektoren, um Nutzdatensymbole als codierte Koeffizientenvektoren zu erzeugen, durch Bestimmen jeweiliger Produkte der jeweiligen Nutzdatenvektoren und einer Codematrix aus zueinander orthogonalen Codewörtern (m₀, m₁, m₂, m₂₅₄), die durch zyklisch verschobene m-Sequenzen eines zyklischen Codes gebildet sind, unter Verwendung eines Parallelsequenz-Spreizspektrum-Codierschemas, wobei der Pilotwert als ein Pilotcode unter Verwendung eines vorbestimmten Kanalschätzungs-Codeworts (m₀) des zyklischen Codes codiert wird;
- Bereitstellen (S408) eines Sender-Referenztaktsignals und Ableiten einer Symboltaktfrequenz und einer Senderträgerfrequenz daraus; und
- Bereitstellen (S410) der Nutzdatensymbole (S₀, S₁, S₂, S₃) zur kontinuierlichen Übertragung über den Funkkanal mit der Symboltaktfrequenz, wobei die Mehrfach-Wiederholungssequenzen des Referenzwertes so codiert sind, dass die dem Referenzwert entsprechenden Codewörter nicht zum Codieren des jeweiligen Anteils von mit dem mindestens einen Nutzdatensymbol, das den mindestens einen Nutzdatenvektor codiert, zu übertragenden Nutzdaten verwendet werden, um es dem Funkempfänger zu ermöglichen, die Symboltaktfrequenz kontinuierlich zu messen und eine Trägerfrequenzsynchronisation mit dem Sender durchzuführen, ohne eine Unterbrechung des Empfangs der Nutzdaten zu benötigen;
- Verwenden (S412) eines Senderträgersignals mit der Senderträgerfrequenz, um die Nutzdatensymbole kontinuierlich über den Funkkanal zu übertragen.

2. Verfahren nach Anspruch 1, das von einem Sender eines Slave-Transceivers des Funkkommunikationssystems durchgeführt wird und umfasst:
- Übertragen der Nutzdatensymbole (S₀, S₁, S₂, S₃) über einen Uplink-Funkkanal des Funkkommunikationssystems an einen Master-Transceiver des Funkkommunikationssystems durch den Sender; und
- Füllen nur eines Slave-spezifischen Datenvektorabschnitts der Nutzdatenvektoren, der im Funkkommunikationssystem nur dem jeweiligen Slave-Transceiver eindeutig zugeordnet ist, mit dem Schutz-Abschnitt und mit dem Anteil der Nutzdaten, der in dem jeweiligen Nutzdatensymbol zu codieren ist, durch den Sender; und
- Füllen des verbleibenden Abschnitts der Nutzdatenvektoren mit dem Referenzwert durch den Sender.

3. Verfahren nach Anspruch 1, das von einem Sender eines Master-Transceivers des Funkkommunikationssystems durchgeführt wird und umfasst:
- Empfangen eines externen Taktsignals mit einer externen Taktfrequenz von einer externen Taktquelle;
- dynamisches Anpassen einer Frequenz des Sender-Referenztaktsignals zum Anpassen der Symboltaktfrequenz und der Senderträgerfrequenz unter Verwendung des externen Taktsignals,.

4. Verfahren nach Anspruch 1, das von einem Sender eines Master-Transceivers des Funkkommunikationssystems durchgeführt wird und wobei ein Ableiten der Symboltaktfrequenz umfasst:
- Aufnehmen eines zyklischen Präfixes in alle Nutzdatensymbole (S₀, S₁, S₂, S₃) ;
- Empfangen eines externen Taktsignals mit einer externen Taktfrequenz von einer externen Taktquelle;
- dynamisches Anpassen einer Länge des zyklischen Präfixes zum Synchronisieren der Symboltaktfrequenz in Bezug auf die Frequenz des externen Takts unter Verwendung des externen Taktsignals.

5. Verfahren zum Betreiben eines Empfängers eines Slave-Funktransceivers eines Funkkommunikationssystems bei einer Synchronisierung von Trägerfrequenzen mit einem Sender eines Master-Transceivers des Funkkommunikationssystems, wobei das Verfahren umfasst:
- Empfangen (S502) eines Funksignals von dem Sender des Master-Transceivers, welches Funksignal eine Vielzahl von Nutzdatensymbolen repräsentiert, die kontinuierlich mit einer Symboltaktfrequenz und einer Symboltaktphase übertragen werden, wobei die Nutzdatensymbole jeweils einen jeweiligen Anteil von Nutzdaten als Koeffizientenvektor unter Verwendung eines Parallel-Sequenz-Spreiz-Spektrum-Codierschemas codieren, wobei der Koeffizientenvektor ein Produkt aus einem jeweiligen Nutzdatenvektor einer vorbestimmten Länge und einer Codematrix aus vorbestimmten, gegenseitig orthogonalen Codewörtern repräsentiert, die durch zyklisch verschobene m-Sequenzen eines zyklischen Codes gebildet werden, das empfangene Signal einen Schutzabschnitt umfasst, der einen zwischen zwei Mehrfach-Wiederholungssequenzen eines codierten Referenzwertes eingebetteten Pilotcode aufweist, wobei der Pilotcode durch Codieren eines Pilotwertes unter Benutzung eines vorbestimmten Kanal-Abschätzungscodeworts des zyklischen Codes erhalten wird, wobei die Mehrfach-Wiederholungssequenzen des Referenzwertes so codiert sind, dass die dem Referenzwert entsprechenden Codewörter die nicht zum Codieren des jeweiligen Anteils von Nutzdaten verwendet werden, die mit dem mindestens einen Nutzdatensymbol zu übertragen sind, das den mindestens einen Nutzdatenvektor codiert, um es dem Funkempfänger zu ermöglichen, die Symboltaktfrequenz kontinuierlich zu messen und eine Trägerfrequenzsynchronisation mit dem Sender durchzuführen, ohne eine Unterbrechung des Empfangs der Nutzdaten zu benötigen;
- Verwenden (S504) eines Slave-Empfänger-Trägersignals zur Abwärtskonvertierung des empfangenen Signals, um ein abwärtskonvertiertes, empfangenes Signal zu erhalten;
- Bestimmen (S506) eines dekorrelierten empfangenen Signals durch Bestimmen einer Faltung des abwärtskonvertierten empfangenen Signals mit den jeweiligen vorbestimmten Codewörtern des zyklischen Codes;
- Verwenden (S508) des dekorrelierten, empfangenen Signals, um ein rekonstruiertes Symboltaktsignal mit einer rekonstruierten Symboltaktfrequenz zu erzeugen;
- Erzeugen (S510) des Slave-Empfänger-Trägersignals als ein periodisches Ausgangssignal, das eine Slave-Empfänger-Trägerfrequenz aufweist, die positiv auf die rekonstruierte Symboltaktfrequenz bezogen ist.

6. Verfahren nach Anspruch 5, wobei ein Erzeugen des rekonstruierten Symboltaktsignals Folgendes umfasst
- Erfassen einer Vielzahl von Startpunkten von Nutzdatensymbolen in dem dekorrelierten, empfangenen Signal umfassend ein Identifizieren eines jeweiligen plötzlichen Anstiegs des dekorrelierten, empfangenen Signals unmittelbar nach einem jeweiligen konstanten Signalabschnitt, der durch mehrere konstante, durch den Schutzabschnitt verursachte Chipwerte gebildet wird als einen jeweiligen Startpunkt; und
- Verwenden einer Vielzahl der erfassten Startpunkte der Nutzdatensymbole zur Bestimmung der rekonstruierten Symboltaktfrequenz.

7. Verfahren nach Anspruch 6, wobei ein Bestimmen des jeweiligen Startpunkts das Bestimmen eines Zeitpunkts umfasst, der mit einem Spitzenwert verbunden ist, der ein Maximum des empfangenen Basisbandsignals an einem Ende des plötzlichen Anstiegs bildet.

8. Verfahren nach Anspruch 5, wobei das Bestimmen des dekorrelierten, empfangenen Signals umfasst
- Verwenden der Frequenz des rekonstruierten Symboltaktsignals zur zeitlichen Steuerung der Bereitstellung der jeweiligen vorbestimmten Codewörter des zyklischen Codes zur Bestimmung einer Faltung des abwärtsgewandelten empfangenen Signals mit den jeweiligen vorbestimmten Codewörtern.

9. Verfahren nach mindestens einem der Ansprüche 5 bis 8, wobei das Erzeugen des Slave-Empfänger-Trägersignals umfasst
- Verwenden des rekonstruierten Symboltaktsignals zum Erzeugen eines periodischen Slavereferenzsignals, das eine Slavereferenzfrequenz aufweist, die positiv auf die Symboltaktfrequenz bezogen ist; und
- Verwenden des Slave-Referenzsignals zum Erzeugen des Slave-Empfänger-Trägersignals.

10. Verfahren nach Anspruch 1, das von einem Sender eines Slave-Transceivers des Funkkommunikationssystems durchgeführt wird, umfassend
- zusätzliches Durchführen des Verfahrens nach Anspruch 9 durch den Slave-Transceiver;
- Verwenden des Slave-Referenzsignals zum zusätzlichen Erzeugen eines Slave-SenderTrägersignals, das eine Slave-Sender-Trägerfrequenz aufweist, die positiv auf die SlaveReferenzfrequenz bezogen ist;
- Verwenden des Trägersignals des Slave-Senders zum Übertragen der Nutzdatensymbole über den Funkkanal des Funkkommunikationssystems.

11. Funksender zum Austausch von Nutzdatensymbolen über einen Funkkanal eines Funkkommunikationssystems, wobei der Funksender umfasst:
- eine Sendertakteinheit, die so konfiguriert ist, dass sie ein Senderreferenztaktsignal bereitstellt und daraus eine Symboltaktfrequenz und eine Senderträgerfrequenz ableitet;
- eine Basisbandeinheit, die mit der Referenztakteinheit des Senders verbunden und konfiguriert ist,
- um Nutzdatenvektoren einer vorbestimmten Länge zu bilden, die jeweils einen bestimmten Anteil von zu übertragenden Nutzdaten enthalten;
- in mindestens einem der Nutzdatenvektoren zusätzlich zu dem jeweiligen Anteil der Nutzdaten einen Schutzabschnitt aufzunehmen, der von einem zwischen zwei Mehrfach-Wiederholungssequenzen eines Referenzwerts eingebetteten Pilotwert gebildet wird;
- um die Nutzdatenvektoren zu codieren und Nutzdatensymbole als codierte Koeffizientenvektoren zu erzeugen, indem jeweilige Produkte der jeweiligen Nutzdatenvektoren und einer Codematrix aus zueinander orthogonalen Codewörtern, die durch zyklisch verschobene m-Sequenzen eines zyklischen Codes gebildet werden, unter Verwendung eines Parallel-Sequenz-Spreiz-Spektrum-Codierschemas bestimmt werden, wobei der Pilotwert als ein Pilotcode unter Verwendung eines vorbestimmten Kanalschätzungs-Codewortes des zyklischen Codes codiert wird und die Mehrfach-Wiederholungssequenzen des Referenzwertes so codiert werden, dass die Codewörter entsprechend dem Referenzwert nicht zum Codieren des jeweiligen Anteils von Nutzdaten verwendet werden, die mit dem mindestens einen Nutzdatensymbol zu übertragen sind, das den mindestens einen Nutzdatenvektor codiert, um es dem Funkempfänger zu ermöglichen, die Symboltaktfrequenz kontinuierlich zu messen und eine Trägerfrequenzsynchronisation mit dem Sender durchzuführen, ohne eine Unterbrechung des Empfangs der Nutzdaten zu benötigen;
- um die Nutzdatensymbole mit der Symboltaktfrequenz für eine kontinuierliche Übertragung über den Funkkanal bereitzustellen; und
- eine Sendeeinheit, die die Nutzdatensymbole empfängt und ein Senderträgersignal mit der Senderträgerfrequenz verwendet, um die Nutzdatensymbole kontinuierlich über den Funkkanal zu senden.

12. Funksender nach Anspruch 11, wobei die Sendertakteinheit für den Betrieb des Funksendeempfängers als Master-Sendeempfänger des Funkkommunikationssystems konfiguriert ist,
- um von einer externen Taktquelle ein externes Taktsignal mit einer externen Taktfrequenz zu empfangen und
- um unter Verwendung des externen Taktsignals eine Frequenz des Sender-Referenztaktsignals dynamisch anzupassen, um die Symboltaktfrequenz und die Senderträgerfrequenz anzupassen.

13. Slave-Transceiver zum Empfangen eines Funksignals, das eine Vielzahl von Nutzdatensymbolen darstellt, die kontinuierlich von einem Master-Transceiver eines Funkkommunikationssystems übertragen werden, wobei
die Nutzdatensymbole jeweils einen jeweiligen Anteil von Nutzdaten als Koeffizientenvektor unter Verwendung eines Parallelsequenz-Spreizspektrum-Codierschemas codieren, wobei der Koeffizientenvektor ein Produkt eines jeweiligen Nutzdatenvektors einer vorbestimmten Länge und einer Codematrix von vorbestimmten gegenseitig orthogonalen Codewörtern darstellt, die von zyklisch verschobenen m-Sequenzen eines zyklischen Codes gebildet werden, und umfassend einen Schutzabschnitt mit einem zwischen zwei Mehrfach-Wiederholungssequenzen eines codierten Referenzwertes eingebetteten Pilotcode, wobei der Pilotcode durch Codieren eines Pilotwertes unter Verwendung eines vorbestimmten Kanalschätzungscodewortes des zyklischen Codes erhalten wird, wobei die Mehrfach-Wiederholungssequenzen des Referenzwerts so codiert sind, dass die Codewörter entsprechend dem Referenzwert nicht zum Codieren des jeweiligen Anteils von Nutzdaten verwendet werden, die mit dem mindestens einen Nutzdatensymbol zu übertragen sind, das den mindestens einen Nutzdatenvektor codiert, um es dem Funkempfänger zu ermöglichen, die Symboltaktfrequenz kontinuierlich zu messen und eine Trägerfrequenzsynchronisation mit dem Sender durchzuführen, ohne eine Unterbrechung des Empfangs der Nutzdaten zu benötigen;
der Slave-Transceiver umfassend:
- eine Empfängereinheit, die so konfiguriert ist, dass sie ein Slave-Empfänger-Trägersignal zur Abwärtskonvertierung des empfangenen Funksignals verwendet und ein abwärtskonvertiertes, empfangenes Signal erhält;
- eine Korrelatoreinheit, die konfiguriert ist, ein dekorreliertes, empfangenes Signal als eine Faltung des herunterkonvertierten, empfangenen Signals mit den jeweiligen vorbestimmten Codewörtern des zyklischen Codes zu bestimmen;
- eine Symboltakt-Rekonstruktionseinheit, die so konfiguriert ist, dass sie unter Verwendung des dekorrelierten empfangenen Signals ein rekonstruiertes Symboltaktsignal mit einer rekonstruierten Symboltaktfrequenz erzeugt; und
- eine Oszillatoreinheit, die mindestens einen steuerbaren Oszillator enthält, der von einem zugehörigen Phasenregelkreis gesteuert wird und der das rekonstruierte Symboltaktsignal empfängt, wobei die Oszillatoreinheit so konfiguriert ist, dass sie das Slaveempfänger-Trägersignal als ein periodisches Ausgangssignal erzeugt, das eine Slaveempfänger-Trägerfrequenz hat, die positiv auf die rekonstruierte Symboltaktfrequenz bezogen ist.

14. Slave-Transceiver nach Anspruch 13, wobei
- die Oszillatoreinheit einen übergeordneten PLL-gesteuerten Oszillator umfasst, der das rekonstruierte Symboltaktsignal empfängt und so konfiguriert ist, ein Slave-Referenztaktsignal zu erzeugen, das eine positiv auf die rekonstruierte Symboltaktfrequenz bezogene Referenztaktfrequenz aufweist;
- einen ersten untergeordneten PLL-gesteuerten Oszillator, der das Referenztaktsignal empfängt, um das Slave-Empfänger-Trägersignal zu erzeugen, wobei die Slave-Empfänger- Trägerfrequenz positiv auf die Referenztaktfrequenz bezogen ist;
- einen zweiten untergeordneten PLL-gesteuerten Oszillator zur Erzeugung eines Slave-Transceiver-Basisbandtaktsignals.

15. Slave-Transceiver nach Anspruch 14, ferner umfassend
- einen Funksender nach Anspruch 11, der für den Betrieb als Slave-Funksender konfiguriert ist; wobei
- die Oszillatoreinheit mit der Sendertakteinheit verbunden ist, um das Slave-Referenztaktsignal als das Sender-Referenztaktsignal bereitzustellen; und wobei
- die Oszillatoreinheit ferner einen dritten untergeordneten PLL-gesteuerten Oszillator zur Erzeugung des Senderträgersignals mit der Senderträgerfrequenz umfasst, wobei die Senderträgerfrequenz positiv auf die Referenztaktfrequenz bezogen ist.

## Revendications

1. Un procédé pour faire fonctionner un émetteur radio d'un émetteur-récepteur radio en transmettant des symboles de données de charge utile via un canal radio d'un système de communication radio à un récepteur radio, le procédé comprenant les étapes consistant à :
- former (S402) des vecteurs de données de charge utile d'une longueur prédéterminée, chacun comprenant une fraction respective de données de charge utile à transmettre ;
- inclure (S404) dans au moins un des vecteurs de données de charge utile, en plus de la fraction respective des données de charge utile, une section de garde formée par une valeur pilote intégrée entre deux séquences à répétitions multiples d'une valeur de référence ;
- coder (S406) les vecteurs de données de charge utile pour générer des symboles de données de charge utile en tant que vecteurs de coefficients codés, en déterminant les produits respectifs des vecteurs de données de charge utile respectifs et une matrice de code de mots de code mutuellement orthogonaux (m₀, m₁, m₂ m₂₅₄) formés par des séquences m décalées cycliquement d'un code cyclique, en utilisant un schéma de codage à spectre étalé en séquence parallèle, dans lequel la valeur pilote est codée en tant que code pilote en utilisant un mot de code d'estimation de canal prédéterminé (m₀) du code cyclique ;
- fournir (S408) un signal d'horloge de référence de l'émetteur et en déduire une fréquence d'horloge de symbole et une fréquence porteuse de l'émetteur ; et
- fournir (S410) les symboles de données de charge utile (S₀, S₁, S₂, S₃) pour une transmission continue via le canal radio à la fréquence d'horloge de symbole, dans lequel les séquences à répétitions multiples de la valeur de référence sont codées de telle sorte que les mots de code correspondant à la valeur de référence ne sont pas utilisés pour coder la fraction respective de données de charge utile à transmettre avec le au moins un symbole de données de charge utile qui code(nt) le au moins un vecteur de données de charge utile, afin de permettre au récepteur radio de mesurer en continu la fréquence d'horloge de symbole et d'effectuer une synchronisation de fréquence porteuse avec l'émetteur sans nécessiter une interruption de la réception des données de charge utile ;
- utiliser (S412) un signal de porteuse de l'émetteur ayant la fréquence porteuse de l'émetteur pour transmettre en continu les symboles de données de charge utile via le canal radio.

2. Le procédé de la revendication 1, qui est exécuté par un émetteur d'un émetteur-récepteur esclave du système de communication radio et comprend les faits que :
- l'émetteur transmet les symboles de données de charge utile (S₀, S₁, S₂, S₃) via un canal radio de liaison montante du système de communication radio à un émetteur-récepteur maître du système de communication radio ; et
- l'émetteur ne remplit qu'une section de vecteur de données spécifique à l'esclave des vecteurs de données de charge utile, qui est attribuée sans ambiguïté dans le système de communication radio uniquement à l'émetteur-récepteur esclave donné, avec la section de garde et avec la fraction de données de charge utile qui doit être codée dans le symbole de données de charge utile respectif, et
- l'émetteur remplit toute section restante des vecteurs de données de charge utile avec la valeur de référence.

3. Le procédé de la revendication 1, qui est exécuté par un émetteur d'un émetteur-récepteur maître du système de communication radio et comprend les étapes consistant à :
- recevoir d'une source d'horloge externe un signal d'horloge externe ayant une fréquence d'horloge externe ;
- adapter dynamiquement, en utilisant le signal d'horloge externe, une fréquence du signal d'horloge de référence de l'émetteur pour adapter la fréquence d'horloge de symbole et la fréquence porteuse de l'émetteur.

4. Le procédé de la revendication 1, qui est exécuté par un émetteur d'un émetteur-récepteur maître du système de communication radio, et dans lequel la dérivation de la fréquence d'horloge de symbole comprend les étapes consistant à :
- inclure un préfixe cyclique dans tous les symboles de données de charge utile (S₀, S₁, S₂, S₃) ;
- recevoir d'une source d'horloge externe un signal d'horloge externe ayant une fréquence d'horloge externe ;
- adapter dynamiquement, à l'aide du signal d'horloge externe, une longueur du préfixe cyclique pour synchroniser la fréquence d'horloge de symbole par rapport à la fréquence d'horloge externe.

5. Un procédé pour faire fonctionner un récepteur d'un émetteur-récepteur radio esclave d'un système de communication radio en synchronisant les fréquences porteuses avec un émetteur d'un émetteur-récepteur maître du système de communication radio, le procédé comprenant les étapes consistant à:
- recevoir (S502) de l'émetteur de l'émetteur-récepteur maître un signal radio représentant une pluralité de symboles de données de charge utile transmis en continu à une fréquence d'horloge de symbole et une phase d'horloge de symbole, dans lequel les symboles de données de charge utile codent chacun une fraction respective de données de charge utile en tant que vecteur de coefficient à l'aide d'un schéma de codage à spectre étalé en séquence parallèle, le vecteur de coefficient représentant un produit d'un vecteur de données de charge utile respectif d'une longueur prédéterminée et d'une matrice de code de mots de code mutuellement orthogonaux prédéterminés formés par des séquences m décalées cycliquement d'un code cyclique, le signal reçu comprenant une section de garde ayant un code pilote intégré entre deux séquences à répétitions multiples d'une valeur de référence codée, dans lequel le code pilote est obtenu en codant une valeur pilote à l'aide d'un mot de code d'estimation de canal prédéterminé du code cyclique,
dans lequel les séquences à répétitions multiples de la valeur de référence sont codées de telle sorte que les mots de code correspondant à la valeur de référence ne sont pas utilisés pour coder la fraction respective de données de charge utile à transmettre avec le au moins un symbole de données de charge utile qui code le au moins un vecteur de données de charge utile, afin de permettre au récepteur radio de mesurer en continu la fréquence d'horloge de symbole et d'effectuer une synchronisation de fréquence porteuse avec l'émetteur sans nécessiter une interruption de la réception des données de charge utile ;
- utiliser (S504) un signal de porteuse du récepteur esclave pour convertir vers le bas le signal reçu afin d'obtenir un signal reçu converti vers le bas ;
- déterminer (S506) un signal reçu décorrélé en déterminant une convolution du signal reçu converti vers le bas avec les mots de code prédéterminés respectifs du code cyclique ;
- utiliser (S508) le signal reçu décorrélé pour générer un signal d'horloge de symbole reconstruit ayant une fréquence d'horloge de symbole reconstruite ;
- générer (S510) le signal de porteuse du récepteur esclave en tant que signal de sortie périodique qui a une fréquence porteuse du récepteur esclave qui est positivement liée à la fréquence d'horloge de symbole reconstruite.

6. Le procédé de la revendication 5, dans lequel la génération du signal d'horloge de symbole reconstruit comprend
- la détection d'une pluralité de points de départ de symboles de données de charge utile dans le signal reçu décorrélé, comprenant l'identification comme point de départ respectif d'une augmentation soudaine respective du signal reçu décorrélé immédiatement après une section de signal constant respective formée par plusieurs valeurs de bribes constantes causées par la section de garde ; et
- l'utilisation d'une pluralité de points de départ détectés des symboles de données de charge utile pour déterminer la fréquence d'horloge de symbole reconstruite.

7. Le procédé selon la revendication 6, dans lequel la détermination du point de départ respectif comprend la détermination d'un point dans le temps associé à un pic qui forme un maximum du signal en bande de base reçu à la fin de la montée brusque.

8. Le procédé selon la revendication 5, dans lequel la détermination du signal reçu décorrélé comprend l'étapes consistant à
- utiliser la fréquence du signal d'horloge de symbole reconstruit pour synchroniser la fourniture des mots de code prédéterminés respectifs du code cyclique pour déterminer une convolution du signal reçu converti vers le bas avec les mots de code prédéterminés respectifs.

9. Le procédé d'au moins l'une des revendications 5 à 8, dans lequel la génération du signal de porteuse du récepteur esclave comprend
- l'utilisation du signal d'horloge de symbole reconstruit pour générer un signal de référence esclave périodique qui a une fréquence de référence esclave qui est positivement liée à la fréquence d'horloge de symbole ; et
- l'utilisation du signal de référence esclave pour générer le signal de porteuse du récepteur esclave.

10. Le procédé de la revendication 1, qui est exécuté par un émetteur d'un émetteur-récepteur esclave du système de communication radio, comprenant
- l'émetteur-récepteur esclave exécutant en outre le procédé de la revendication 9 ;
- l'utilisation du signal de référence esclave pour générer en outre un signal de porteuse d'émetteur-esclave qui a une fréquence porteuse de l'émetteur-esclave qui est positivement liée à la fréquence de référence esclave ;
- l'utilisation du signal de porteuse de l'émetteur esclave pour transmettre les symboles de données de charge utile via le canal radio du système de communication radio.

11. Émetteur radio pour échanger des symboles de données de charge utile via un canal radio d'un système de communication radio, l'émetteur radio comprenant :
- une unité d'horloge d'émetteur configurée pour fournir un signal d'horloge de référence d'émetteur et pour en déduire une fréquence d'horloge de symbole et une fréquence porteuse d'émetteur ;
- une unité de bande de base, qui est connectée à l'unité d'horloge de référence de l'émetteur et configurée
- pour former des vecteurs de données de charge utile d'une longueur prédéterminée, chacun comprenant une fraction respective des données de charge utile à transmettre ;
- pour inclure dans au moins un des vecteurs de données de charge utile, en plus de la fraction respective des données de charge utile, une section de garde formée par une valeur pilote intégrée entre deux séquences à répétitions multiples d'une valeur de référence ;
- pour coder les vecteurs de données de charge utile et générer des symboles de données de charge utile en tant que vecteurs de coefficients codés, en déterminant les produits respectifs des vecteurs de données de charge utile respectifs et une matrice de code de mots de code mutuellement orthogonaux formés par des séquences m décalées cycliquement d'un code cyclique, en utilisant un schéma de codage à spectre étalé en séquence parallèle, dans lequel la valeur pilote est codée en tant que code pilote en utilisant un mot de code d'estimation de canal prédéterminé du code cyclique et les séquences de répétition multiples de la valeur de référence sont codées de telle sorte que les mots de code correspondant à la valeur de référence ne sont pas utilisés pour coder la fraction respective des données de charge utile à transmettre avec l'au moins un symbole de données de charge utile qui code au moins un vecteur de données de charge utile afin de permettre au récepteur radio de mesurer en continu la fréquence d'horloge de symbole et d'effectuer une synchronisation de fréquence porteuse avec l'émetteur sans nécessiter une interruption de la réception des données de charge utile ;
- pour fournir les symboles de données de charge utile à la fréquence d'horloge des symboles pour une transmission continue via le canal radio ; et
- une unité formant émetteur recevant les symboles de données de charge utile et utilisant un signal de porteuse d'émetteur ayant la fréquence porteuse de l'émetteur pour transmettre en continu les symboles de données de charge utile via le canal radio.

12. L'émetteur radio de la revendication 11, dans lequel l'unité d'horloge de l'émetteur est configurée, pour le fonctionnement de l'émetteur-récepteur radio en tant qu'émetteur-récepteur maître du système de communication radio,
- pour recevoir d'une source d'horloge externe un signal d'horloge externe ayant une fréquence d'horloge externe, et
- pour adapter dynamiquement, en utilisant le signal d'horloge externe, une fréquence du signal d'horloge de référence de l'émetteur pour adapter la fréquence d'horloge de symbole et la fréquence porteuse de l'émetteur.

13. Un émetteur-récepteur esclave pour recevoir un signal radio qui représente une pluralité de symboles de données de charge utile transmis en continu par un émetteur-récepteur maître d'un système de communication radio, dans lequel les symboles de données de charge utile codent chacun une fraction respective de données de charge utile en tant que vecteur de coefficient à l'aide d'un schéma de codage à spectre étalé en séquence parallèle, le vecteur de coefficient représentant un produit d'un vecteur de données de charge utile respectif d'une longueur prédéterminée et d'une matrice de code de mots de code mutuellement orthogonaux prédéterminés formés par des séquences m décalées cycliquement d'un code cyclique, et comprenant une section de garde ayant un code pilote intégré entre deux séquences à répétitions multiples d'une valeur de référence codée, dans lequel le code pilote est obtenu en codant une valeur pilote à l'aide d'un mot de code d'estimation de canal prédéterminé du code cyclique, dans lequel les séquences à répétitions multiples de la valeur de référence sont codées de telle sorte que les mots de code correspondant à la valeur de référence ne soient pas utilisés pour coder la fraction respective de données de charge utile à transmettre avec le au moins un symbole de données de charge utile qui code l'au moins un vecteur de données de charge utile, afin de permettre au récepteur radio de mesurer en continu la fréquence d'horloge de symbole et d'effectuer une synchronisation de fréquence porteuse avec l'émetteur sans nécessiter une interruption de la réception des données de charge utile ; l'émetteur-récepteur esclave comprenant :
- une unité de réception, qui est configurée pour utiliser un signal de porteuse du récepteur esclave pour convertir vers le bas le signal radio reçu et pour obtenir un signal reçu converti vers le bas ;
- une unité de corrélation, qui est configurée pour déterminer un signal reçu décorrélé en tant que convolution du signal reçu converti vers le bas avec les mots de code prédéterminés respectifs du code cyclique ;
- une unité de reconstruction d'horloge de symbole, qui est configurée, en utilisant le signal reçu décorrélé, pour générer un signal d'horloge de symbole reconstruit ayant une fréquence d'horloge de symbole reconstruite ; et
- une unité d'oscillateur, qui comprend au moins un oscillateur contrôlable commandé par une boucle à verrouillage de phase associée et qui reçoit le signal d'horloge de symbole reconstruit, l'unité d'oscillateur étant configurée pour générer le signal de porteuse du récepteur esclave en tant que signal de sortie périodique qui a une fréquence porteuse du récepteur esclave qui est positivement liée à la fréquence d'horloge de symbole reconstruite.

14. L'émetteur-récepteur esclave de la revendication 13, dans lequel :
- l'unité d'oscillateur comprend un oscillateur contrôlé par PLL super-ordonné qui reçoit le signal d'horloge de symbole reconstruit et est configuré pour générer un signal d'horloge de référence esclave qui a une fréquence d'horloge de référence qui est positivement liée à la fréquence d'horloge de symbole reconstruite ;
- un premier oscillateur contrôlé par PLL sub-ordonné qui reçoit le signal d'horloge de référence, pour générer le signal de porteuse du récepteur esclave, la fréquence porteuse du récepteur esclave étant positivement liée à la fréquence d'horloge de référence ;
- un deuxième oscillateur contrôlé par PLL sub-ordonné pour générer un signal d'horloge de bande de base d'émetteur-récepteur esclave.

15. L'émetteur-récepteur esclave de la revendication 14, comprenant en outre :
- un émetteur radio selon la revendication 11 configuré pour fonctionner comme un émetteur radio esclave ; dans lequel
- l'unité d'oscillateur est connectée à l'unité d'horloge de l'émetteur pour fournir le signal d'horloge de référence esclave en tant que signal d'horloge de référence de l'émetteur ; et dans lequel
- l'unité d'oscillateur comprend en outre un troisième oscillateur contrôlé par PLL sub-ordonné pour générer le signal de porteuse de l'émetteur avec la fréquence de porteuse de l'émetteur, la fréquence de porteuse de l'émetteur étant positivement liée à la fréquence d'horloge de référence.
